# EUROPEAN PATENT APPLICATION

(11) **EP 4 572 160 A2**
(43) Date of publication of application: **18.06.2025**
(21) Application number: 24217036.3
(22) Date of filing: 03.12.2024
(51) Int. Cl.: H04B 5/77, H04B 5/79

(54) **DEVICE, CONTROL METHOD FOR DEVICE, AND PROGRAM**

(30) Priority: 14.12.2023 JP 2023211303
(71) Applicant: CANON KABUSHIKI KAISHA, Tokyo 146-8501 (JP)
(72) Inventor: KOMORIYA, Mitsuo, Tokyo, 146-8501 (JP)
(74) Representative: Canon Europe Limited

(57) **Abstract**

A device is a device that is usable in combination with a compatible product. The device detects that the device is combined with the compatible product, detects a near field communication (NFC) tag in the compatible product, and reads one or more pieces of tag information from the detected NFC tag. The device then executes processing related to one of the read one or more pieces of tag information in accordance with whether at least one predetermined condition is satisfied.

## Description

### BACKGROUND

### Field

The present disclosure relates to technology for devices that can be used in combination with compatible products that have tags used for short-distance wireless communication.

### Description of the Related Art

The near field communication (NFC) standard is known as a standard for short-distance wireless communication. In the NFC standard, transmitting a carrier wave and modulating the carrier wave to transmit a message for detecting equipment which is a communication opposite party is referred to as polling. Polling is transmitted by an apparatus that has a function of an NFC standard reader/writer. In addition, equipment that has a function of receiving the polling transmitted by the reader/writer and responding to this polling by applying load modulation to a carrier wave transmitted by the reader/writer is referred to as an NFC tag. Information exchanged under the NFC standard complies with a data format referred to as an NFC data exchange format (NDEF). A plurality of pieces of NDEF information can also be set on a single tag, and a reading apparatus can read the plurality of pieces of NDEF information set on the NFC tag with one NFC communication from the NFC tag. How to process the read NDEF information is left to the apparatus.

In recent years, technology that uses NFC to authenticate articles has become widespread. In particular, NFC authentication technology has been developed to confirm whether an accessory, a part, or the like attached to a device or used in combination with the device is compatible with the device.

Japanese Patent Application Laid-Open No. 2012-134796 discloses technology related to the structure of a mobile phone equipped with a radio frequency identification (RFID) tag. Specifically, a reader/writer antenna based on the RFID standard is provided on a battery pack cover of the mobile phone body. A circuit board of the reader/writer, which is disposed inside the mobile phone body, reads an ID from the RFID tag attached to a battery pack to determine the authenticity of the battery pack (whether it is genuine or not).

When a compatible product corresponding to a device, such as an accessory that can be used in combination with the device, has an NFC tag, it is desirable that the device not only simply reads information stored in the NFC tag, but also executes appropriate processing on the NFC tag depending on a situation.

### SUMMARY

The present disclosure provides technology that makes it possible to perform appropriate processing when a device reads information from an NFC tag of a compatible product.

The invention provides a device according to claim 1 and a control method for a device according to claim 15. Further features of the present disclosure will become apparent from the following description of exemplary illustration with reference to the accompanying drawings.

### BRIEF DESCRIPTION OF THE DRAWINGS

Fig. 1 is a diagram showing a configuration example of a system in a first embodiment.
Fig. 2 is a diagram showing a configuration example of the system in a state where a compatible product is attached to a device.
Fig. 3 is a diagram showing a configuration example of the device.
Fig. 4 is a diagram showing a configuration example of a compatible product.
Fig. 5 is a flowchart showing an overview of processing performed by the device in the first embodiment.
Fig. 6 is a flowchart showing details of processing of an NFC tag detection/authentication flow in Fig. 5.
Fig. 7 is a flowchart showing a continuation of Fig. 6.
Fig. 8 is a flowchart showing details of an NFC tag detection process in Fig. 6.
Fig. 9 is a diagram showing NDEF information recorded in an NFC tag.
Fig. 10 is a sequence diagram showing processing of the entire system in the first embodiment.
Fig. 11 is a diagram showing a configuration example of a system in a second embodiment.
Fig. 12 is a diagram showing a configuration example of the system in a state where a compatible product is attached to a power receiving apparatus.
Figs. 13A and 13B are diagrams showing a configuration example of the system when the power receiving apparatus is placed on a power transmitting apparatus.
Fig. 14 is a diagram showing a configuration example of the power receiving apparatus.
Fig. 15 is a diagram showing a configuration example of the power transmitting apparatus.
Fig. 16 is a flowchart showing an overview of processing for the power receiving apparatus in the second embodiment.
Fig. 17 is a flowchart showing details of a wireless power transmission process of the power receiving apparatus.
Fig. 18 is a flowchart showing a wireless power transmission pre-setting process.
Fig. 19 is a sequence diagram showing processing of the entire system in the second embodiment.
Fig. 20 is a sequence diagram showing a continuation of Fig. 19.
Fig. 21 is a flowchart showing details of processing of an NFC tag detection/authentication flow in a third embodiment.
Fig. 22 is a flowchart showing details of a wireless power transmission process of a power receiving apparatus.
Fig. 23 is a sequence diagram showing processing of the entire system in the third embodiment.
Fig. 24 is a flowchart showing details of a wireless power transmission process of a power receiving apparatus in a fourth embodiment.
Fig. 25 is a flowchart showing a requested power selection process.
Fig. 26 is a sequence diagram showing processing of the entire system.
Fig. 27 is a flowchart showing a modification example of the processing of the NFC tag detection/authentication flow shown in Figs. 6 and 7.
Fig. 28 is a flowchart showing details of processing of the NFC tag detection/authentication flow shown in Fig. 21.

### DESCRIPTION OF THE EMBODIMENTS

Hereinafter, embodiments will be described in detail with reference to the accompanying drawings. Not all of a plurality of features in each of the following embodiments are essential, and the plurality of features may be combined arbitrarily. In the drawings, the same or similar components are denoted by the same reference numerals, and thus repeated descriptions will be omitted.

### <First embodiment>

### [Configuration of system]

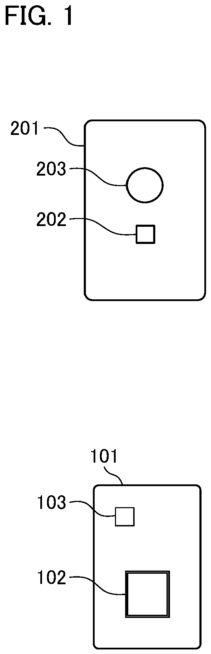

Fig. 1 is a diagram showing a configuration example of a system in a first embodiment. The system in this embodiment includes a device 101 and a compatible product for the device 101. The device 101 is equipped with a near field communication (NFC) function, and operates in, for example, a card emulation mode by using the function to be capable of performing electronic money settlement and the like. The device 101 is also equipped with an NFC function that enables NFC communication when the device 101 operates in a reader/writer mode to be able to read an NFC tag 202. The device 101 has a built-in NFC antenna 102 for performing NFC communication, and the NFC antenna 102 is disposed in the vicinity of the surface of the housing of the device 101 along the surface. When the NFC tag 202 approaches the surface of the device 101 in which the NFC antenna 102 is built in, the device 101 operates in a reader/writer mode to be able to communicate with the NFC tag 202. The device 101 also has a built-in sensor 103 that is provided to detect that a compatible product 201 has been combined with the device 101.

A compatible product being combined with a device typically means that the compatible product is attached (mounted) to the device. However, this is not limiting, and it can mean anything as long as one or more functions or effects are generated, for example, by using the device and the compatible product simultaneously even when the device and the compatible product are not in physical contact with each other. The "effects" can also include human sensory effects, such as visual and auditory effects. In the following embodiments, a compatible product being attached to a device will be given as a typical example of a compatible product being combined with a device.

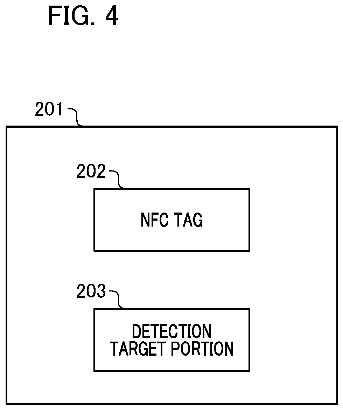

Fig. 4 is a diagram showing a configuration example of the compatible product 201. Referring to Figs. 1 and 4, the compatible product 201 is equipped with the NFC tag 202. The NFC tag 202 is an example of equipment that operates without a battery and realizes short-distance wireless communication. More specific examples include an NFC/RFID tag capable of NFC communication, NFC communication equipment that operates in a card emulation mode, and the like. When the compatible product 201 is NFC communication equipment that operates in a card emulation mode, it may be equipped with a control unit that controls communication and the entire compatible product 201. The compatible product 201 includes a detection target portion 203. When the compatible product 201 is attached to or combined with the device 101, the device 101 detects the detection target portion 203 using the sensor 103, thereby detecting that the compatible product 201 has been attached to the device 101. This is an example of a detection means for detecting that the device 101 and the compatible product 201 have been combined.

Hereinafter, a smartphone will be described as an example of the device 101, and a cover or a case of the device 101 will be described as an example of the compatible product 201 for the device 101, but this is not limiting. The device 101 may be, for example, a camera, a tablet PC, a laptop, an automobile, a robot, medical equipment, a printer, or the like. The compatible product 201 is a compatible product for the device 101 listed above, and may be, for example, a battery, a camera, a smartphone, a tablet PC, a laptop, an automobile, a robot, medical equipment, a printer, a gimbal, attachment equipment, or the like. Hereinafter, a magnet will be described as an example of the detection target portion 203 of the compatible product 201, and a magnetic sensor will be described as an example of the sensor 103 of the device 101, but this is not limiting. For example, the sensor 103 may be an optical sensor, an acoustic sensor, a heat sensor, or the like.

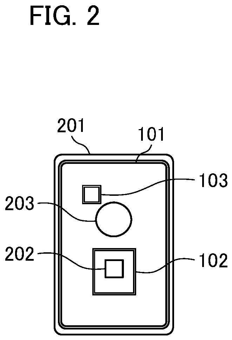

Fig. 2 is a diagram showing a configuration example of the system when the compatible product 201 is attached to the device 101. The compatible product 201 has a shape that covers the housing of the device 101, and is attached to the device 101. At this time, the NFC tag 202 of the compatible product 201 is disposed to overlap the region of the NFC antenna 102 of the device 101. Thereby, the device 101 can communicate with the NFC tag 202 by operating in a reader/writer mode. In addition, the detection target portion 203 of the compatible product 201 is disposed in the vicinity of the sensor 103 of the device 101. Thereby, the device 101 detects that the compatible product 201 has been attached to the device 101 by detecting the detection target portion 203 using the sensor 103. The sensor 103 detecting a combination of the device 101 and the compatible product 201 is an example of a first condition.

### [Configurations of device and compatible product]

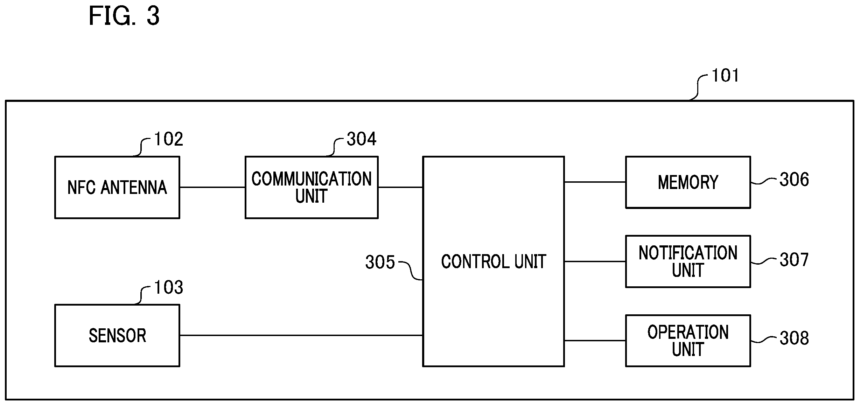

Fig. 3 is a diagram showing a configuration example of the device 101. The device 101 includes the NFC antenna 102, the sensor 103, a communication unit 304, a control unit 305, a memory 306, a notification unit 307, and an operation unit 308.

The communication unit 304 and the NFC antenna 102 connected thereto are hardware modules that realize an NFC function. Specifically, the hardware modules realize a card emulation mode that substitutes for the role of a non-contact IC card, a reader/writer mode for reading the NFC tag 202, and a P2P mode for directly exchanging messages between NFC devices. For example, the card emulation mode can be used to perform electronic money settlement and the like. The communication unit 304 and the control unit 305 are mainly examples of a reading means (or acquisition means) for detecting an NFC tag and reading (or acquiring) one or more pieces of tag information from the detected NFC tag.

The sensor 103 is, for example, a magnetic sensor, and detects that the compatible product 201 has been combined with the device 101 by detecting the detection target portion 203 which is a magnet.

The control unit 305 controls the entire device 101. The control unit 305 performs control by executing a control program stored in the memory 306, for example. The control unit 305 also stores information to be stored during the execution of various processes in the memory 306. The control unit 305 includes one or more processors, such as a central processing unit (CPU) or a micro-processing unit (MPU). The control unit 305 may include a memory other than the memory 306 that stores the control program, and may store information to be stored during the execution of various processes in the other memory. The control unit 305 may be constituted by hardware dedicated to a specific process, such as an application specific integrated circuit (ASIC). The control unit 305 may also include an array circuit such as a field programmable gate array (FPGA) compiled to execute a specific process.

In this embodiment, the control unit 305 is shown as one component, but this is not limiting. For example, an NFC control unit that controls processing related to NFC communication may be configured separately from the control unit 305. When the control unit 305 is configured as a plurality of separate control units, the control units are connected to each other via a communication interface and are capable of data communication. In this case, specifically, the communication interface may be any interface that realizes data communication, such as I2C or GPIO.

The memory 306 stores various types of information such as identification information and device configuration information, and control programs. The memory 306 may store information obtained by a functional unit other than the control unit 305.

The notification unit 307 notifies a user of information by any method such as a visual, audible, or tactile method. For example, the notification unit 307 notifies the user of the state of the device 101. The notification unit 307 includes, for example, a liquid crystal display, an LED, a speaker, a vibration generation circuit, and/or other notification devices.

The operation unit 308 has a reception function of receiving the user's operations on the device 101. The operation unit 308 includes, for example, a button, a keyboard, a voice input device, a motion detection device, and/or other input devices. An example of the voice input device is a microphone. An example of the motion detection device is an acceleration sensor or a gyro sensor.

A device in which the notification unit 307 and the operation unit 308 are integrated, such as a touch panel, may be used.

### [Processing of device]

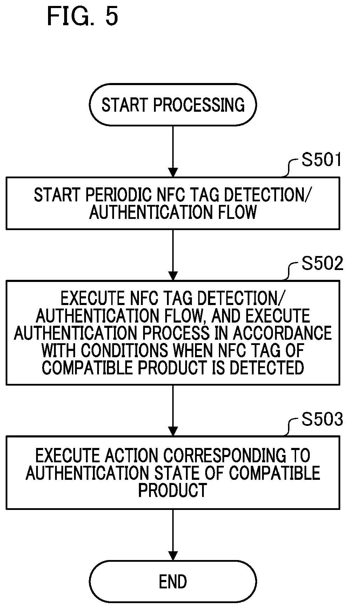

Fig. 5 is a flowchart showing an overview of processing performed by the device 101. This processing can be realized, for example, by causing the control unit 305 of the device 101 to execute a program read from the memory 306. At least a part of the following procedure can be realized by hardware. In this case, the hardware can be realized, for example, by using a predetermined compiler to automatically generate a dedicated circuit using a gate array circuit such as an FPGA from a program for realizing each processing step.

Mainly, the control unit 305 and the program for processing are examples of a processing means for performing processing by switching (selecting) a processing method related to one or more pieces of tag information read from the NFC tag 202 depending on whether a predetermined condition is satisfied.

The processing related to the tag information means, for example, the following processes [1] to [3] performed by the device 101.
[1] A process of confirming whether there is tag information
[2] A process based on contents of tag information
[3] A process related to power transmission using tag information (to be described in second and subsequent embodiments)
The processing method means which process (one, or two or more) of [1], [2], and [3] is to be executed (or not executed), and which tag data (one or more) of the plurality of pieces of tag data for [2] is to be processed. The processing method may also include the order in which the three of [1], [2], and [3] are to be processed. As will be described in the second and subsequent embodiments, the process related to power transmission in [3] includes various setting processes for power transmission which are performed before a power transmitting apparatus actually transmits power.

In S501, the device 101 starts processing of a periodic NFC tag detection/authentication flow. The periodic NFC tag detection/authentication flow starts, for example, at one of the following three timings.
(a) A timing at which a user performs a predetermined operation via the operation unit 308 of the device 101
(b) A timing at which the power supply of the device 101 is turned on
(c) A timing at which the sensor 103 detects that the compatible product 201 has been attached to the device 101
The "predetermined operation" in (a) is an operation for executing the NFC tag detection/authentication flow, or other operations.

In S502, the device 101 executes the NFC tag detection/authentication flow. When the device 101 detects the NFC tag 202 of the compatible product 201, the device 101 executes an authentication process in accordance with conditions to be described below when NDEF information (tag information) of the NFC tag 202 includes authentication information.

In S503, the device 101 executes an action corresponding to an authentication state of the compatible product. The action is, for example, performing a specific process in an application of the device (for example, a smartphone) 101 when the compatible product 201 has been successfully authenticated.

Other examples of the above-described action will be described. For example, it is assumed that the device 101 is a camera, and the compatible product 201 is its battery. Information on the power supply specifications is included in the NFC tag 202 of the battery, and the camera detects the information by executing an NFC tag detection/authentication flow. When the power supply specifications of the battery match the power supply specifications of the camera, the camera authenticates the battery. At this time, when the battery is not successfully authenticated, the camera displays, on its graphical user interface (GUI), that the battery does not match the specifications, and stops operating. Thereby, it is possible to prevent heat generation in the battery and a failure in the camera.

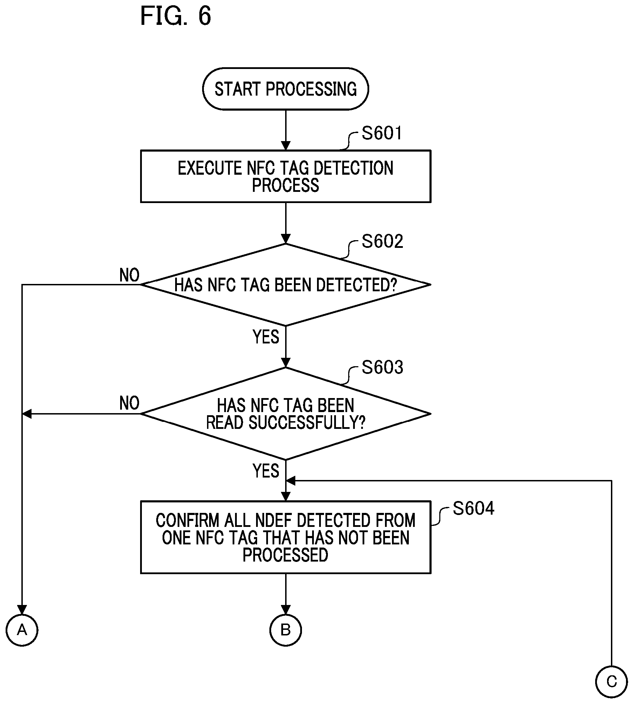

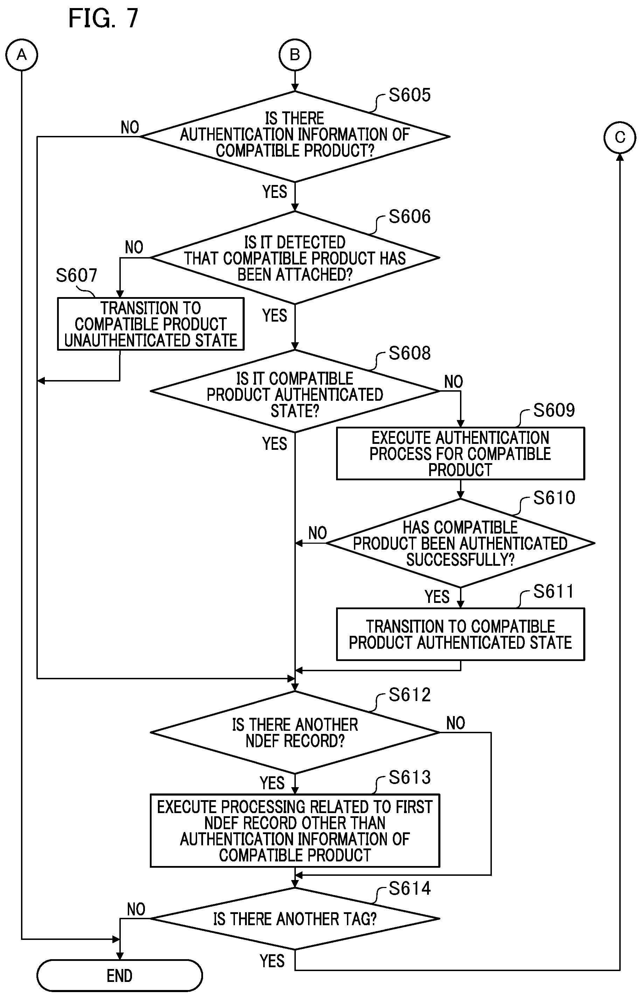

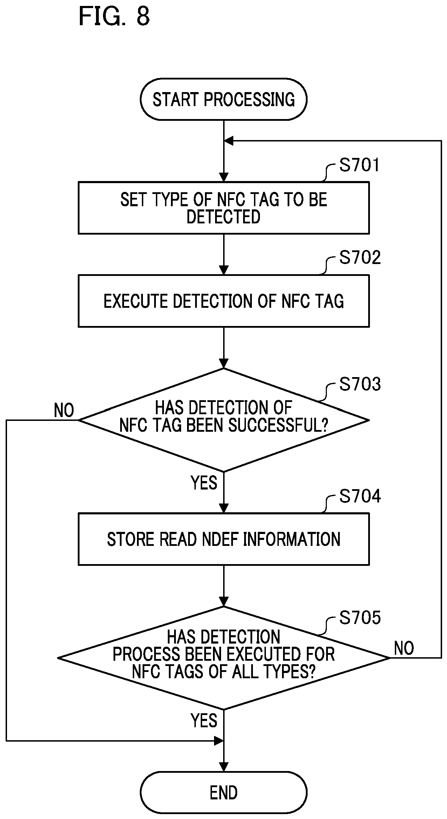

Figs. 6 and 7 are flowcharts showing details of processing of the NFC tag detection/authentication flow (S502) in Fig. 5. Fig. 8 is a flowchart showing details of the NFC tag detection process (mainly S601 to S603) in Fig. 6.

In Fig. 6, first, in S601, the device 101 executes the NFC tag detection process. As shown in Fig. 8, in S701, the device 101 sets the type of NFC tag to be detected after starting the process. There are a plurality of types of NFC tags, that is, Type-A/Type-B/Type-F, and the type of NFC tag that has not yet been detected is set. In S702, the device 101 executes the detection of an NFC tag. This can be executed by a reader/writer function that complies with the NFC standard. Specifically, the device 101 transmits a carrier wave and modulates the carrier wave to transmit a message for detecting an NFC tag of the set type. When the NFC tag receives a message from the device 101, it responds to this message by applying load modulation to the transmitted carrier wave. Thereby, the device 101 detects the NFC tag 202.

In S703, the device 101 determines whether the detection of the NFC tag 202 has been successful. When the device 101 determines that the detection of the NFC tag 202 has been successful (YES in S703), the device 101 stores the NDEF information read from the NFC tag 202 in S704. On the other hand, when the device 101 determines that the NFC tag detection has not been successful (NO in S703), the device 101 ends the processing. When the NDEF information is stored in S704, the device 101 manages information for each NFC tag that has been detected.

In S705, the device 101 determines whether a detection process has been executed for the NFC tags of all of the types (Type-A/Type-B/Type-F). When the device 101 determines that a detection processing has been executed for all of the types (YES in S705), the device 101 ends the processing. On the other hand, when the device 101 determines that a detection processing has not been executed for all of the types (NO in S705), the device 101 returns to S701 and performs an NFC tag detection process for the next type.

The above is the NFC tag detection process (mainly S601 to S603) executed in Fig. 6. By performing a detection process for all of the NFC tag types, it is possible to appropriately grasp a situation even when there are a plurality of NFC tags in the vicinity of the device 101. For example, when there are two NFC tags and they are different types, NDEF information can be read from all of the tags.

Description returns to the flowchart in Fig. 6. In S602, the device 101 determines whether an NFC tag has been detected in the NFC tag detection process in S601. When an NFC tag has not been detected (No in S602), the processing ends. When the device 101 has detected an NFC tag (Yes in S602), the device 101 determines in S603 whether the NFC tag has been successfully read. When the NFC tag has not been successfully read (No in S603), the processing ends. When the NFC tag has been successfully read (Yes in S603), the device 101 stores, in the memory, the NDEF information of all NFC tags that have been successfully read.

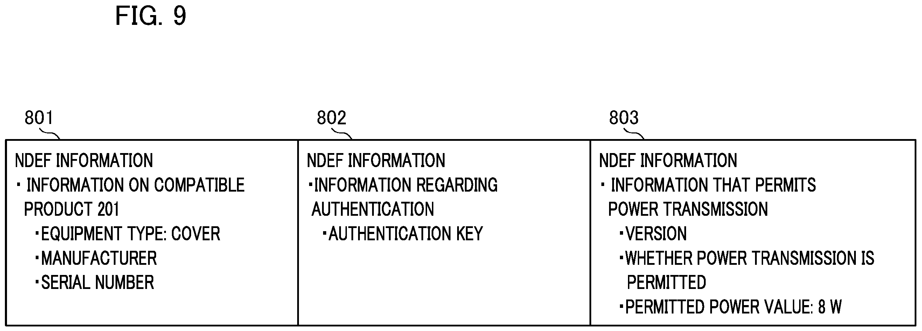

In S604, the device 101 confirms all of the pieces of NDEF information detected from one NFC tag for which processing has not yet been executed. Confirming the NDEF information means analyzing NDEF information 801 to 803 shown in Fig. 9. The NFC tag 202 of the compatible product 201 is assumed to be an NFC tag implemented by a provider of the compatible product 201, and has three pieces of NDEF information as an example.

The NDEF information 801 is information on the compatible product 201. As the information, equipment type information (for example, information indicating that the type of compatible product 201 is a cover), manufacturer information, serial number, and the like are assumed. The NDEF information 802 is information on the authentication of the compatible product 201 (authentication information for authenticating the compatible product 201), and, for example, an authentication key is assumed. The NDEF information 803 is information that permits power transmission for the NFC tag 202 of the compatible product 201 (information indicating that power transmission is permitted), and the version of wireless power transmission, information on whether power transmission is permitted, and a permitted power value (for example, 8 W) are assumed. In this embodiment, the "power transmission" as mentioned herein is mainly power transmission for wireless charging of a smartphone (device 101). The "power transmission permitted" means that, for example, power transmission is permitted as long as it is a degree of power that does not damage the NFC tag 202. The NDEF information is not limited to that shown in Fig. 9, and various information can be set depending on the use of the provider of the compatible product 201.

Referring to Fig. 7, in S605, the device 101 determines whether the NDEF information confirmed in S604 includes authentication information of the compatible product 201 (the NDEF information 802 in Fig. 9). When there is no authentication information of the compatible product 201 (No in S605), the device 101 does not perform an authentication process and proceeds to S612. When there is authentication information of the compatible product 201 (Yes in S605), the device 101 determines in S606 whether the sensor 103 has detected that the compatible product 201 is attached to the device 101.

When attachment has not been detected (No in S606), the device 101 transitions to a compatible product unauthenticated state and stores, in the memory, the fact that the compatible product 201 is in an unauthenticated state in S607. Thereafter, the device 101 proceeds to S612. The compatible product unauthenticated state means that the compatible product 201 has not been successfully authenticated.

In addition, when attachment has not been detected (No in S606), the device 101 cancels the authentication even when the compatible product 201 is already in an authenticated state. That is, the state of the compatible product 201 transitions to a compatible product unauthenticated state (S607). It is possible to determine that the compatible product 201 is in an authenticated state by performing the processes of S609 to S611, as will be described below. That is, when the compatible product 201 is previously attached to the device 101, and an authentication process for the compatible product 201 has been executed and successfully authenticated, the fact that the compatible product is in a compatible product authenticated state is stored in the memory, and thus the device can determine that the compatible product 201 is in an authenticated state.

When it is detected that the compatible product 201 has been attached to the device 101 (Yes in S606), the device 101 determines in S608 whether the compatible product is already in a compatible product authenticated state. The compatible product authenticated state means a state where the compatible product 201 has been successfully authenticated. The compatible product authenticated state is an example of a second condition. When the compatible product is in a compatible product authenticated state (Yes in S608), the device 101 does not perform an authentication process and proceeds to S612.

When the compatible product is not in a compatible product authenticated state (No in S608), the device 101 executes an authentication process for the compatible product 201 in S609. The device 101 performs authentication by processing at least the authentication information (NDEF information 802 (authentication key)) among the pieces of NDEF information of the NFC tag of the compatible product 201, and stores the result of the authentication process. In S610, the device 101 determines whether the authentication process for the compatible product has been successful. When the authentication process for the compatible product has been successful (Yes in S610), the device 101 transitions to a compatible product authenticated state in S611, stores, in the memory, the fact that the compatible product is in a compatible product authenticated state, and proceeds to S612. When the authentication process for the compatible product has not been successful (No in S610), the device 101 proceeds to S612 without transitioning to an authenticated state.

As described above, when the compatible product 201 is successfully authenticated once and then, for example, the compatible product 201 is removed from the device 101, the state of the compatible product 201 can be returned to a compatible product unauthenticated state. Thus, when the compatible product 201 is attached to the device 101 again thereafter, an appropriate authentication process can be executed again.

In S612, the device 101 determines whether the NFC tag being processed includes NDEF information other than authentication information. When there is no NDEF information other than authentication information (No in S612), the processing proceeds to S614. When there is NDEF information other than authentication information (Yes in S612), the device 101 executes processing for the first NDEF information other than authentication information in S613. When the NDEF information in Fig. 8 is used as an example, it is assumed that the device 101 will read the equipment type information, manufacturer information, and serial number of the compatible product 201 in response to the processing of the NDEF information 801. Thereafter, the processing of the device 101 proceeds to S614. In the NFC tag, NDEF information is read in order from the left side of Fig. 9. That is, the NDEF information 801 is read first. Alternatively, when the NDEF information is stored in the NFC tag, it can also be assumed that the NDEF information is stored in association with an ID or number for identifying the NDEF information. In this case, the device 101 may read the NDEF information in the order of IDs or numbers.

In S614, the device 101 determines whether an NFC tag other than the processed NFC tag has been detected in S604. When an NFC tag other than the processed NFC tag has been detected (Yes in S614), the device 101 returns to S604 and executes the subsequent processing again for the other NFC tag other than the processed NFC tag. When an NFC tag other than the processed NFC tag has not been detected (No in S614), the device 101 ends the processing.

### [Processing of entire system]

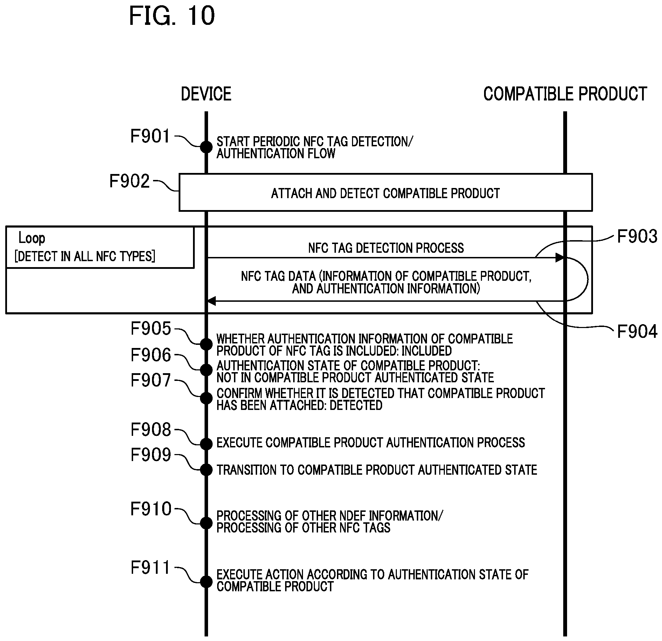

Fig. 10 is a sequence diagram showing processing of the entire system when the above-described processing is executed.

In F901, the device 101 starts a periodic NFC tag detection/authentication flow. Although not shown in the drawing, the device 101 executes an NFC tag detection/authentication flow periodically at predetermined time intervals. In this example, it is assumed that the compatible product 201 is attached to the device 101 after the periodic NFC tag detection/authentication flow starts (F902).

In F903, the device 101 executes the NFC tag detection/authentication flow and reads the NFC tag of the compatible product 201 and performs an authentication process.

In F904, the device 101 acquires NDEF information (authentication information (for example, an authentication key)) related to authentication from the NFC tag of the compatible product 201.

In F905 to F909, the device 101 performs a predetermined process on the basis of the authentication information acquired in F904. That is, the device 101 executes the authentication process in accordance with conditions, performs a transition of the state of the compatible product 201, and stores the state (authenticated or unauthenticated state) in the memory, as shown in the flowcharts in Figs. 6 and 7.

In F910, the device 101 executes processing of NDEF information other than the NDEF information related to the authentication of the compatible product 201, and when another NFC tag is detected, the device 101 executes processing of the other NFC tag.

In F911, the device 101 executes an action according to the authentication state of the compatible product 201.

For example, when a compatible product that is used by being attached to a device is authenticated using NFC technology, it is desirable that the authentication be performed after the compatible product is attached to the device, and when the authentication is once successful, there is no need for the subsequent authentication unless the compatible product is removed from the device. However, when conditions for performing the authentication process are not set appropriately, there is a concern that an authentication process will be performed a plurality of times even when authentication is not necessary. As a result, there is a concern of an increase in power consumption of the device and a decrease in processing operation of other applications. On the other hand, according to this embodiment described above, in a state where the device 101 has successfully authenticated the compatible product 201 once, it is possible to prevent an authentication process from being performed again in the next periodic NFC tag detection process. Thus, it is possible to avoid an increase in the power consumption of the device 101 and a decrease in the processing operation of other applications. Furthermore, when the compatible product 201 is removed from the device 101 after the compatible product 201 has been successfully authenticated once, the state of the compatible product 201 can be returned to a compatible product unauthenticated state. Thus, when the compatible product 201 is attached to the device 101 again thereafter, it is possible to execute an appropriate authentication process again. As described above, when the device 101 reads information from the NFC tag 202, it is possible to perform appropriate processing in accordance with a situation.

### <Second embodiment>

Hereinafter, a second embodiment will be described in detail below with reference to the accompanying drawings. In addition, repeated description of the same or similar components as those in the first embodiment will be omitted. In this embodiment, a power receiving apparatus is applied as the device 101 in the first embodiment. The power receiving apparatus is equipment that can perform wireless power transmission using an electromagnetic induction method for non-contact charging on the basis of the WPC standard specified by the Wireless Power Consortium (WPC).

In the WPC standard, the magnitude of power guaranteed when the power receiving apparatus receives power from a power transmitting apparatus is specified by a value referred to as Guaranteed Load Power (hereafter referred to as a "GP"). The GP indicates the value of power guaranteed to be output to a load such as a charging circuit of the power receiving apparatus, for example, even when power transmission efficiency between a power receiving coil and a power transmitting coil decreases due to a fluctuation in a positional relationship between the power receiving apparatus and the power transmitting apparatus. For example, when the GP is 15 watts, the power transmitting apparatus will transmit power by performing control so that 15 watts is output to the load in the power receiving apparatus, even when the power transmission efficiency decreases due to a fluctuation in the positional relationship between the power receiving coil and the power transmitting coil.

### [Configuration of system]

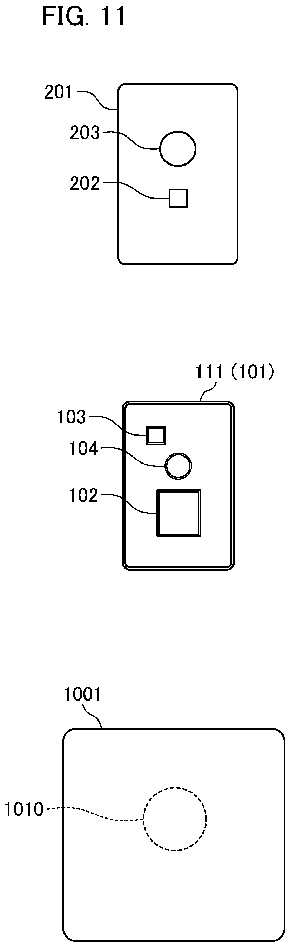

Fig. 11 is a diagram showing a configuration example of a system in this embodiment. This system is constituted by a power receiving apparatus 111 which is the device 101, a compatible product 201 of the power receiving apparatus 111, and a power transmitting apparatus 1001. In the following description, the power receiving apparatus may be referred to as an RX, and the power transmitting apparatus may be referred to as a TX.

An RX 111 is electronic equipment that receives power from a TX 1001 and charges its built-in battery when placed on the TX 1001. The TX 1001 is electronic equipment that wirelessly transmits power to the placed RX 111. An RX 101 and the TX 1001 may have a function of executing applications other than a wireless charging function. For example, the RX 101 is a smartphone, and the TX 1001 is accessory equipment for charging the battery of the smartphone. However, the disclosure is not limited thereto example, and the RX 101 and the TX 1001 may be a tablet device, a storage device such as a hard disk device or a memory device, or an information processing device such as a personal computer (PC). The RX 101 and the TX 1001 may also be an imaging apparatus such as a still camera or a video camera, an automobile, a robot, medical equipment, a printer, or the like.

The RX 111 includes an NFC antenna 102 and a sensor 103, similar to the device 101 shown in Fig. 1. The RX 111 also has a built-in power receiving coil 104, which is disposed in the vicinity of the surface of the housing of the RX 111 along the surface. The RX 111 can perform wireless power transmission based on the WPC standard on the TX 1001 by using the power receiving coil 104.

In a state where the RX 111 is placed, the TX 1001 wirelessly transmits power to the RX 111 on the basis of the WPC standard. The TX 1001 has a built-in power transmitting coil 1010 that can wirelessly transmit power to the RX 111 on the basis of the WPC standard in a state where the RX 111 is placed, and the power transmitting coil 1010 is disposed in the vicinity of the surface of the housing of the TX 1001 along the surface.

Hereinafter, a magnet will be described as an example of a detection target portion 203 of the compatible product 201, and a magnetic sensor will be used as an example of a sensor 103 of the device 101, but the disclosure is not limited thereto.

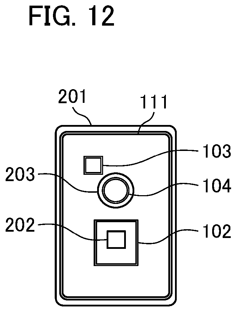

Fig. 12 shows a configuration example of the system in a state where the compatible product 201 is attached to the RX 111. The compatible product 201 has a shape that covers the housing of the RX 111, and is attached to the RX 111. At this time, the NFC tag 202 of the compatible product 201 is disposed to overlap the region of the NFC antenna 102 of the RX 111. Thereby, the RX 111 can communicate with the NFC tag 202 by operating in a reader/writer mode.

Further, in a state where the compatible product 201 is attached to the RX 111, the detection target portion 203 of the compatible product 201 is disposed in the vicinity of the sensor 103 of the RX 111. Thereby, the RX 111 detects the detection target portion 203 using the sensor 103, and thus detects that the compatible product 201 has been attached to the RX 111. In addition, the arrangement of the power receiving coil 104 of the RX 111 is disposed inside the detection target portion 203, which is a circular magnet of the compatible product 201, when viewed from above. It is assumed that the detection target portion 203 and the power receiving coil 104 are relatively disposed such that it is possible to receive power using an MPP, which is expected to become a power profile of the WPC standard in the future, as will be described below. The MPP is an abbreviation for Magnetic Power Profile.

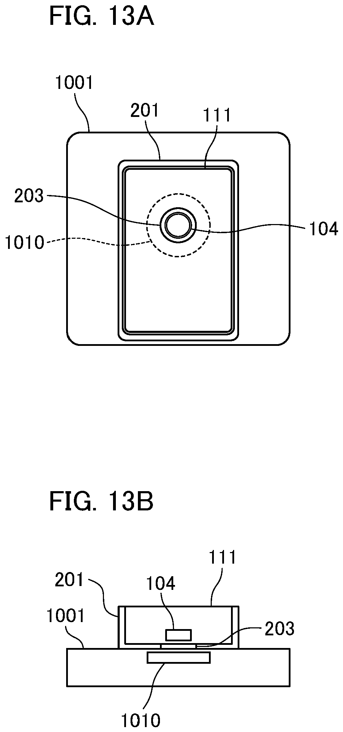

Fig. 13 is a diagram showing a configuration example of the system in a state where the compatible product 201 is attached to the RX 111, and the RX 111 is placed on the TX 1001. Fig. 13A is a plan view, and Fig. 13B is a schematic cross-sectional view. As shown in Figs. 13A and 13B, the power transmitting coil 1010 of the TX 1001 is disposed to overlap the power receiving coil 104 of the RX 111 in a plan view. Thereby, the TX 1001 can wirelessly transmit power to the RX 111 on the basis of the WPC standard.

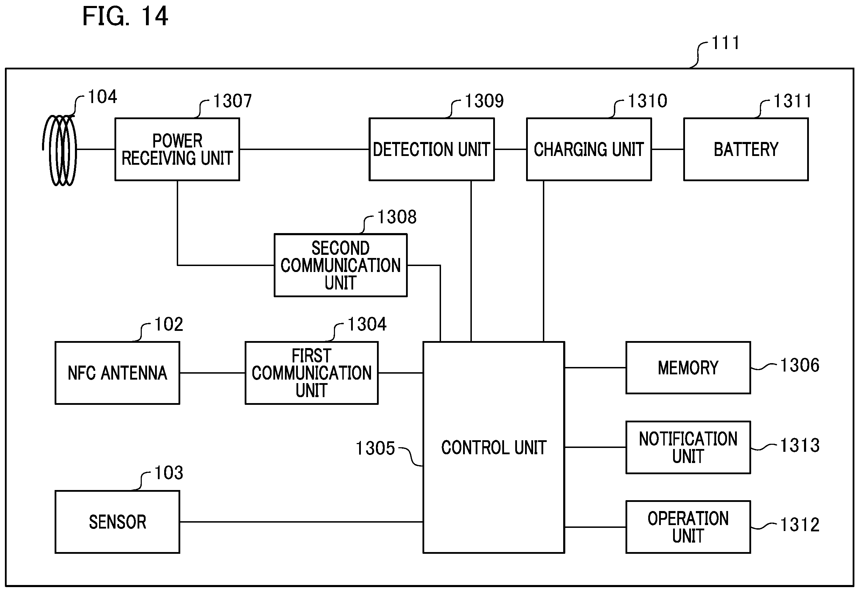

[Configurations of power receiving apparatus, compatible product, and power transmitting apparatus] Fig. 14 is a diagram showing a configuration example of the RX 111. The RX 111 includes the NFC antenna 102, the sensor 103, a first communication unit 1304, a control unit 1305, and a memory 1306. The RX 111 also includes the power receiving coil 104, a power receiving unit 1307, a second communication unit 1308, a detection unit 1309, a charging unit 1310, a battery 1311, an operation unit 1312, and a notification unit 1313.

The NFC antenna 102 and the first communication unit 1304 are hardware modules that realize an NFC function. The NFC antenna 102 and the first communication unit 1304 realize a card emulation mode, a reader/writer mode, P2P, and the like, similar to the NFC antenna 102 and the communication unit 304 in the first embodiment.

The sensor 103, the control unit 1305, and the memory 1306 basically have the same functions as the NFC antenna 102, the sensor 103, the control unit 305, and the memory 306 described in Fig. 3.

The control unit 1305 is shown as one component, but is not limited thereto. For example, a WPC control unit that controls processing related to receiving power from the TX 1001 may be configured separately from the control unit 1305. Alternatively, an NFC control unit that controls processing related to NFC communication may be configured separately from the control unit 1305. In addition, the WPC control unit and the NFC control unit may each be configured separately from the control unit 1305. A specific hardware example of the control unit 1305 is the same as the hardware example of the control unit 305 in Fig. 3, and thus the description thereof will be omitted.

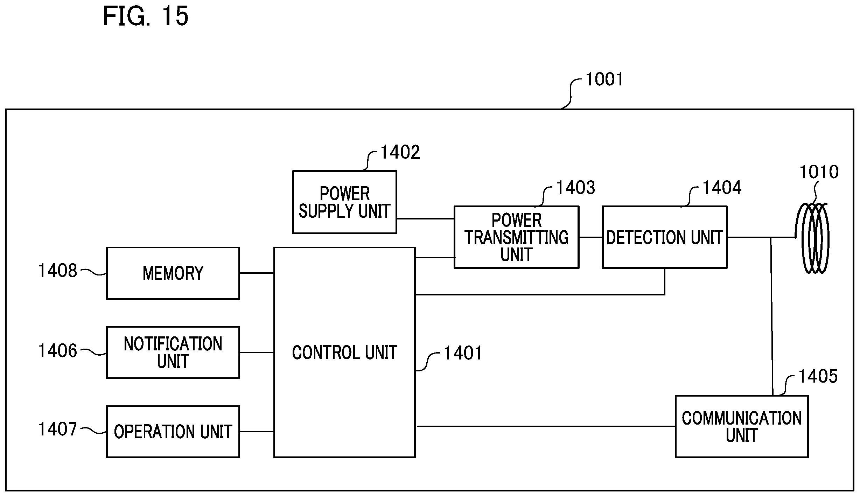

The second communication unit 1308 performs wireless power transmission communication based on the WPC standard with a communication unit 1405 (Fig. 15) of the TX 1001. The second communication unit 1308 controls the power receiving unit 1307 to communicate with the TX 1001. Specifically, the second communication unit 1308 demodulates electromagnetic waves input from the power receiving coil 104 to acquire information transmitted from the TX 1001, and performs load modulation on the electromagnetic waves to superimpose the information to be transmitted to the TX 1001 on the electromagnetic waves. That is, the communication performed by the second communication unit 1308 is performed to be superimposed on the electromagnetic waves transmitted from the power transmitting coil 1010 of the TX 1001.

The detection unit 1309 detects that the RX 111 is placed on the TX 1001 on the basis of the WPC standard. The detection unit 1309 detects, for example, at least one of a voltage value and a current value of the power receiving coil 104 when the power receiving unit 1307 receives a Digital Ping of the WPC standard via the power receiving coil 104. The detection unit 1309 can determine that the RX 111 is placed on the TX 1001, for example, when the voltage value is less than a predetermined voltage threshold value or the current value exceeds a predetermined current threshold value.

In this manner, in the disclosure, the power receiving apparatus being placed on the power transmitting apparatus means that the power receiving apparatus is in a state where the power receiving apparatus can receive power from the power transmitting apparatus (for example, the power receiving apparatus is disposed at a position in which it can receive power). Here, even when the power receiving apparatus is placed on the power transmitting apparatus, a case is also conceivable in which the power receiving apparatus is not necessarily in a state where it can receive power. For example, this may be a case where a cover, a case, or other members that block or attenuate electromagnetic waves are attached to the power receiving apparatus, or a case where an unintended member that blocks or attenuates electromagnetic waves is provided between the power transmitting apparatus and the power receiving apparatus. The phase "the power receiving apparatus is placed on the power transmitting apparatus," which will be described later in the flowchart, is merely an example of case where the power receiving apparatus is in a state where it can receive power from the power transmitting apparatus. In addition, a state where the power receiving apparatus can receive power is not limited to a state where the power receiving apparatus is placed on the power transmitting apparatus. For example, the state where the power receiving apparatus can receive power may be a state where the power receiving apparatus and the power transmitting apparatus are in contact with each other or in close proximity to each other through mechanical engagement, or may be a state where the power receiving apparatus is in contact with the power transmitting apparatus (for example, via a compatible product) through a magnetic force. In the disclosure, the following description will be given by taking a state where the power receiving apparatus is placed on the power transmitting apparatus as a typical example of a state where the RX can receive power.

The charging unit 1310 charges the battery 1311 with power supplied from the power receiving unit 1307. The charging unit 1310 also starts or stops charging the battery 1311 under the control of the control unit 1305, and adjusts the power to be used to charge the battery 1311 on the basis of the charging state of the battery 1311. When the power used by the charging unit 1310 changes, the power supplied from the power receiving unit 1307, that is, the received power in the RX 111, also changes accordingly. The charging unit 1310 shown here is a load in the RX 111.

The power receiving unit 1307 or the charging unit 1310 is mainly an example of a power receiving means for wirelessly receiving power from the power transmitting apparatus.

The battery 1311 supplies the entire RX 111 with power required for the control unit 1305 to control each part of the RX 111 and required for power reception and communication. The battery 1311 also stores power received via the power receiving coil 104.

The notification unit 1313 notifies a user of, for example, the charging state of the RX 111 and information indicating the state of power transmission of the wireless power transmission system including the RX 111 and the TX 1001 as shown in Fig. 13. A specific hardware example of the notification unit 1313 is the same as that of the notification unit 307 in Fig. 3, and thus the description thereof will be omitted.

The operation unit 1312 has a reception function of receiving the user's operations on the RX 111. A specific hardware example of the operation unit 1312 is the same as that of the operation unit 308 in Fig. 3, and thus the description thereof will be omitted.

The configuration of the compatible product 201 of the RX 111 in this embodiment is the same as that in the first embodiment, and thus the description thereof will be omitted.

Fig. 15 is a diagram showing a configuration example of the TX 1001 in this embodiment. The TX 1001 includes a control unit 1401, a power supply unit 1402, a power transmitting unit 1403, a detection unit 1404, a power transmitting coil 1010, a communication unit 1405, a notification unit 1406, an operation unit 1407, and a memory 1408.

The control unit 1401 controls the entire TX 1001 by executing a control program stored in the memory 1408, for example. That is, the control unit 1401 controls each functional unit shown in Fig. 15. The control unit 1401 also stores information to be stored during the execution of various processes in the memory 1408. The control unit 1401 also performs control related to power transmission and control related to an NFC function. Furthermore, the control unit 1401 may perform control for executing applications other than wireless power transmission. A specific hardware example of the control unit 1401 is the same as the hardware example of the control unit 305 in Fig. 3, and thus the description thereof will be omitted.

The control unit 1401 may be constituted by one processor, or a main control unit that controls the entirety and a sub-control unit that controls a power transmission process and NFC communication may be realized by separate processors.

The power supply unit 1402 supplies the entire TX 1001 with power required for the control unit 1401 to control the TX 1001 and required for the power transmission and communication. The power supply unit 1402 is, for example, a commercial power source or a battery. The battery stores power supplied from the commercial power source.

The power transmitting unit 1403 converts DC or AC power output from the power supply unit 1402 into AC frequency power in a frequency band used for wireless power transmission, and inputs the AC frequency power to the power transmitting coil 1010 to generate electromagnetic waves for the RX 1 1 1 to receive power. The frequency of the AC power generated by the power transmitting unit 1403 is, for example, approximately several hundreds of kHz (for example, 110 kHz to 205 kHz). The power transmitting unit 1403 inputs AC frequency power to the power transmitting coil 1010 so that the electromagnetic waves for the RX 111 to transmit power are output from the power transmitting coil 1010, in response to an instruction from the control unit 1401. The power transmitting unit 1403 controls the intensity of the electromagnetic waves to be output by adjusting a voltage (power transmission voltage), current (power transmission current), or both of them to be input to the power transmitting coil 1010. Increasing the power transmission voltage or power transmission current increases the intensity of the electromagnetic waves, and decreasing the power transmission voltage or power transmission current decreases the intensity of the electromagnetic waves. The power transmitting unit 1403 also controls the output of AC frequency power so that power transmission from the power transmitting coil 1010 is started or stopped, on the basis of instructions from the control unit 1401.

The power transmitting unit 1403 notifies the control unit 1401 of the current transmitted power, and thus the control unit 1401 can know the transmitted power at any timing. The measurement of the transmitted power and the notification given to the control unit 1401 may be performed by a unit other than the power transmitting unit 1403.

The detection unit 1404 detects whether an object is placed on the TX 1001 on the basis of the WPC standard. Specifically, the detection unit 1404 detects whether an object is placed on an interface surface of the TX 1001. The detection unit 1404 detects, for example, at least one of a voltage value and a current value of the power transmitting coil 1010 when the power transmitting unit 1403 transmits detects an Analog Ping of the WPC standard via the power transmitting coil 1010. The detection unit 1404 may detect a change in impedance. Then, when the voltage value falls below a predetermined voltage value or the current value exceeds a predetermined current value, the detection unit 1404 may determine that an object is placed on the TX 1001. Whether the object is the RX 111 or another foreign object is determined on the basis of whether a predetermined response has been made to the Digital Ping that is subsequently transmitted by the communication unit 1405. That is, when the TX 1001 has received the predetermined response, the object is determined to be the RX 111, and otherwise the object is determined to be an object other than the power receiving apparatus.

A condition that the RX 111 is in a state where it can receive power from the TX 1001 is an example of a third condition.

The communication unit 1405 performs control communication with the RX 111 on the basis of the WPC standard as described above. The communication unit 1405 modulates the electromagnetic waves output from the power transmitting coil 1010 and transmits information to the RX 111 to perform communication. The communication unit 1405 also demodulates the electromagnetic waves output from the power transmitting coil 1010 and modulated by the RX 111 to acquire the information transmitted by the RX 111. That is, the communication performed by the communication unit 1405 is performed to be superimposed on the electromagnetic waves transmitted from the power transmitting coil 1010. The communication unit 1405 also performs NFC communication and detects an NFC tag of equipment that transmits power. In the communication unit 1405, a module that performs control communication based on the WPC standard and a module that performs NFC communication may be realized by a single hardware module or may be realized by separate hardware.

The notification unit 1406 notifies a user of information by any method such as a visual, audible, or tactile method. For example, the notification unit 1406 notifies the user of a charging state of the TX 1001 or information indicating the state of power transmission of the wireless power transmission system including the TX 1001 and the RX 111 as shown in Fig. 13. A specific hardware example of the notification unit 1406 is the same as that of the notification unit 307 in Fig. 3, and thus the description thereof will be omitted.

The operation unit 1407 has a reception function of receiving the user's operations on the TX 1001. A specific hardware example of the operation unit 1407 is the same as that of the operation unit 308 in Fig. 3, and thus the description thereof will be omitted.

The memory 1408 stores various information such as identification information and capability information, control programs, and the like. The capability information includes, for example, information indicating whether the device has a high-precision foreign object detection processing capability. The memory 1408 may store information obtained by a functional unit other than the control unit 1401.

### [Processing for power receiving apparatus]

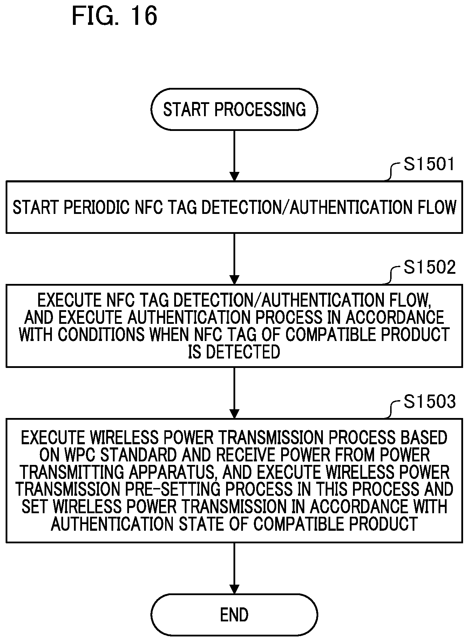

Fig. 16 is a flowchart showing an overview of the processing of the RX 111. This processing can be realized, for example, by causing the control unit 1305 of the RX 111 to execute a program read from the memory 1306. At least a part of the following procedure can be realized by hardware. In this case, the hardware can be realized, for example, by using a predetermined compiler to automatically generate a dedicated circuit using a gate array circuit such as an FPGA from a program for realizing each processing step.

The processing of the RX 111 in S 1501 and S1502 is the same as the processing of the device 101 in S501 and S502 (Fig. 5) in the first embodiment. The start timing of 51501 is the same as (a) to (c) described above in S501 in the first embodiment. Details of the process of S1502 are the same as those in Figs. 6 and 7 in the first embodiment.

In S1503, the RX 111 executes a wireless power transmission process based on the WPC standard and receives power from the TX 1001. Here, the RX 111 executes a wireless power transmission pre-setting process and sets the wireless power transmission in accordance with the authentication state of the compatible product 201. The wireless power transmission pre-setting process is an example of setting related to a wireless power transmission process. The wireless power transmission pre-setting process will be abbreviated as a pre-setting process below. In this embodiment, as an example of the pre-setting process, a process of determining a power profile of wireless power transmission based on the WPC standard in accordance with the authentication state of the compatible product 201 is shown. The details will be described later.

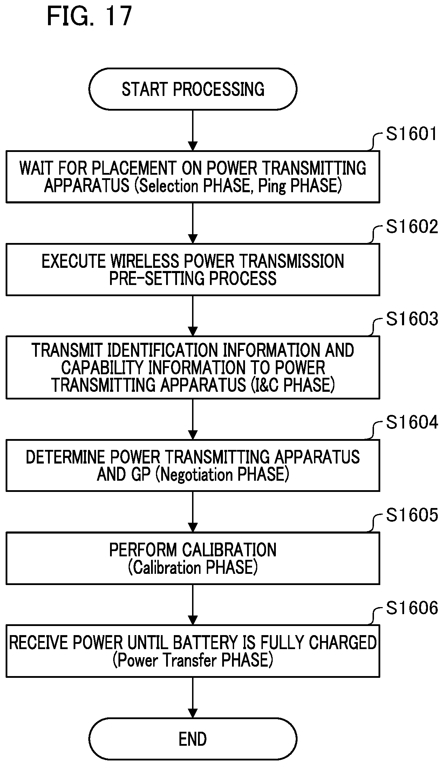

Fig. 17 is a flowchart showing details of a wireless power transmission process of the RX 111 based on the WPC standard in S1503 in Fig. 16. In S1601, the RX 111 executes processing defined as a Selection phase and a Ping phase of the WPC standard, and waits for the RX 111 to be placed on the TX 1001. The RX 111 detects that it has been placed on the TX 1001, for example, by detecting a Digital Ping from the TX 1001. When the RX 111 receives the Digital Ping from the TX 1001, the RX 111 transmits a Signal Strength (SIG) data Packet to the TX 1001.

When the RX 111 detects in S1602 that the RX 111 has been placed on the TX 1001, the RX 111 executes a pre-setting process. The pre-setting process is a process of setting wireless power transmission in accordance with the authentication state of the compatible product.

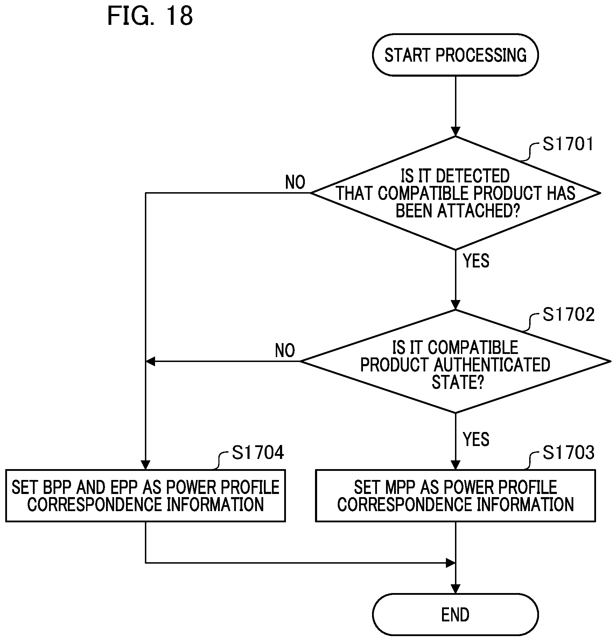

Fig. 18 is a flowchart showing an example of a pre-setting process and showing a process of setting a power profile in wireless power transmission based on the WPC standard. The power profile is one standard in the WPC standard, for example, a Baseline Power Profile (BPP) and an Extended Power Profile (EPP). A maximum power supply amount is 5 W for BPP and 15 W for EPP. In addition, the above-described MPP is scheduled to be added in the future.

When processing is started, the RX 111 determines in S1701 whether it is detected that a compatible product has been attached to the RX 111. This determination process has already been performed in S606 (Fig. 7) in S1502, and thus the determination result may be used in S1701. When it is not detected that a compatible product has been attached (No in S1701), the RX 111 sets the BPP and the EPP as power profiles of the WPC standard supported by the RX 111 in S1704, stores this setting in the memory 1306, and ends the processing.

When the RX 111 detects that a compatible product has been attached (Yes in S1701), the RX 111 proceeds to S1702 and determines whether the compatible product is in a compatible product authenticated state. This is determined on the basis of information on the authentication state stored in the memory 1306 in S611 when the NFC tag detection/authentication flow is executed in S1502.

When the compatible product is not in a compatible product authenticated state (No in S1702), the RX 111 executes the above-described process in S1704 and ends the processing. When the compatible product is in a compatible product authenticated state (Yes in S1702), the RX 111 sets an MPP as a power profile of the WPC standard supported by the RX 111 in S1703, stores this setting in the memory 1306, and ends the processing.

Description returns to Fig. 17. In S1603, the RX 111 executes processing specified as an Identification and Configuration phase (I&C phase) of the WPC standard. In the I&C phase, the RX 111 transmits an Identification Data Packet (ID Packet) to the TX 1001. The ID Packet stores an information element that can specify the version of the WPC standard that is supported, in addition to a Manufacturer Code and a Basic Device ID, which are identification information for each individual RX 111.

The RX 111 may transmit its own identification information to the TX 1001 using an Extended Identification Packet (XID Packet). The RX 111 also transmits a Configuration data Packet to the TX 1001. The Configuration data Packet includes capability information (equipment configuration information) of the RX 111 which is shown below.
- Information that makes it possible to specify the version of the WPC standard supported by the RX 111
- A Maximum Power Value or a Reference Power, which is a value for specifying the maximum power that can be supplied to a load by the RX 111
- Information indicating whether the RX 111 has a Negotiation function of the WPC standard
- Parameters used in frequency shift modulation, which is a communication modulation method used when the TX 1001 transmits information to the RX 111

However, this information is only an example, and the identification information and capability information of the RX 111 may be replaced with other information or may include other information. For example, the identification information may be any other identification information making it possible to identify an individual RX 111, such as a Wireless Power ID. The RX 111 may also transmit the identification information and the capability information by a method other than the I&C phase communication of the WPC standard.

Here, the RX 111 notifies the TX 1001 of the information on the power profile of the WPC standard supported by the RX 111 by including the information in either an ID Packet, an XID Packet, or a Configuration data Packet. Upon receiving this notification, the TX 1001 compares the information on the power profile of the WPC standard supported by the RX 111 with the power profile of the WPC standard supported by the TX 1001, and determines the power profile to be used. For example, the TX 1001 sets the priority of the power profiles to be used in advance, and selects and determines the power profile with the highest priority out of the power profiles supported by both the TX 1001 and the RX 111. For example, the priority of the power profiles to be used is set as follows: first: an MPP, second: an EPP, third: a BPP. When the power profiles supported by both the TX 1001 and the RX 111 are the MPP and the BPP, the MPP will be selected and determined as the power profile to be used. Another example is a method in which the RX 111 notifies the TX 1001 of information on the power profiles supported by itself along with the priority thereof by including them in a Packet of either ID, XID, or Configuration data. At this time, the TX 1001 selects and determines a power profile with a high priority of the RX 111, which is notified of by the RX 111, out of the power profiles supported by both the TX 1001 and the RX 111.

In S1604, when the RX 111 transmits the identification information and the capability information, the RX 111 starts communication of a Negotiation phase specified by the WPC standard. In the Negotiation phase, the RX 111 transmits a requested power value to the TX 1001 and determines the value of GP between the TX 1001 and the RX 111. The GP is an example of power information indicating power requested from the power transmitting apparatus by the power receiving apparatus.

When the RX 111 determines the GP, the RX 111 starts communication of a Calibration phase specified by the WPC standard in S1605. In the Calibration phase, the RX 111 transmits information on a predetermined received power value to TX 1001 so that the TX can derive a relationship between transmitted power and received power in a state without a foreign object. Here, the information on the predetermined received power value includes a received power value in a light load state/Light Load and a received power value in a maximum load/Connected Load state.

When the RX 111 transmits the information on the received power value, the RX 111 starts receiving power by communication of the Power Transfer phase specified by the WPC standard in S1606. Thereafter, when the battery is fully charged, the RX 111 transmits End Power Transfer (EPT) of the WPC standard. Thereby, power transmission from the TX 1001 is stopped, and a series of processes for non-contact charging ends.

### [Processing of entire system]

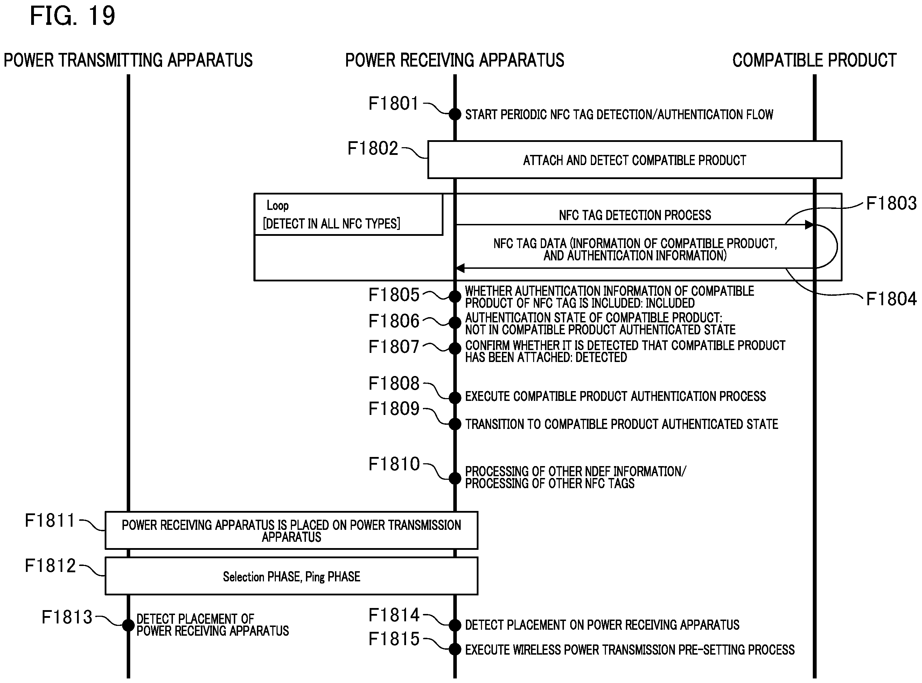

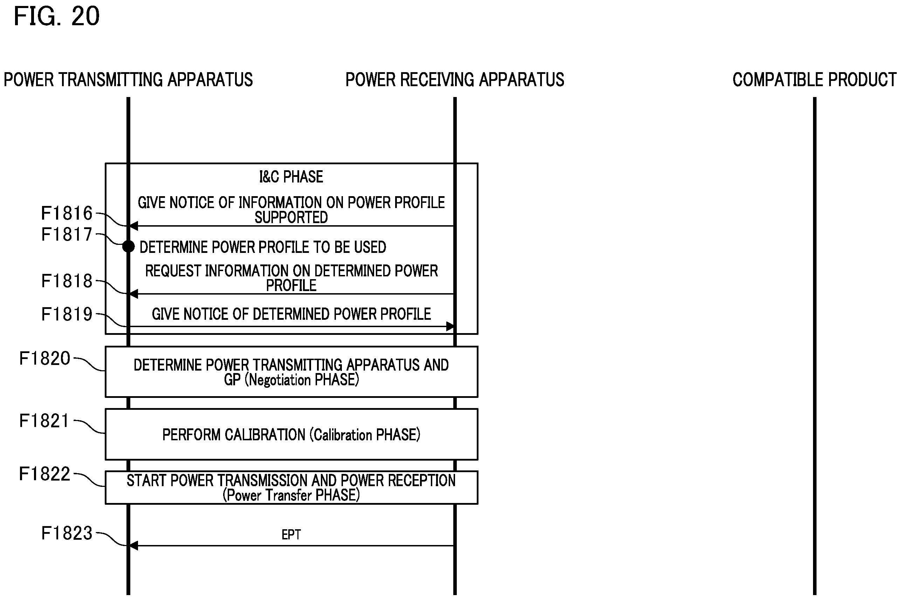

Figs. 19 and 20 are sequence diagrams showing processing of the entire system. In the initial state, the RX 111 is not placed on the TX 1001 (a state where power is not receivable). The processes of F1801 to F1810 performed by the RX 111 are the same as the processes of F901 to F910 performed by the device 101 in the first embodiment (Fig. 10), and thus the description thereof will be omitted.

In an example of this flowchart, it is assumed that the RX 111 is placed on the TX 1001 in F1811. When the RX 111 is placed on the TX 1001 in F1811, the TX 1001 and the RX 111 execute communication of a Ping phase of the WPC standard in F1812, and thus the TX 1001 detects in F1813 that the RX 101 has been placed on the TX 1001. In addition, the RX 101 detects in F1814 that the RX 101 has been placed on the TX 1001. Thereafter, the RX 111 executes a pre-setting process in F1815 as shown in the flowchart of Fig. 18, and sets a power profile of the WPC standard supported by the RX 111.

The RX 111 transmits identification information and capability information to the TX 1001 by communication of an I&C phase of the WPC standard (not shown). In the I&C phase, in F1816, the RX 111 notifies the TX 1001 of information on the power profile of the WPC standard supported by the RX 111. In F1817, the TX 1001 determines the power profile to be used on the basis of the information on the power profile of the WPC standard supported by the RX 111 and the information on the power profile of the WPC standard supported by the TX 1001. In F 1818, the RX 111 requests information on the power profile to be used from the TX 1001. This request can be realized by transmitting a General Request Packet to the TX 1001. In F1819, the TX 1001 responds to the request for the information on the power profile to be used which is made by the RX 111, and notifies the RX 111 of the power profile to be used. The TX 1001 can notify the RX 111 of the power profile to be used by transmitting a Power Transmitter Identification Packet (TX ID Packet) to the RX 111.

In F1820 to F1822, the TX 1001 and the RX 111 perform communication of the Negotiation phase of the WPC standard and communication of the Negotiation phase, then proceed to the Power Transfer phase to start a power transmission and reception process. When the battery is set to be in a fully charged state, the RX 111 transmits an End Power Transfer Packet (EPT Packet) for requesting the TX 1001 to stop transmitting power to the TX 1001 in F1823. The TX 1001 having received the EPT Packet stops transmitting power.

According to this embodiment described above, in a state where the RX 111 has successfully authenticated the compatible product 201 once, it is possible to prevent an authentication process from being performed again in the next periodic NFC tag detection process. Thus, it is possible to avoid an increase in the power consumption of the RX 111 and a decrease in the processing operation of other applications. Furthermore, when the compatible product 201 is removed from the RX 111 after the compatible product 201 has been successfully authenticated once, the state of the compatible product 201 can be returned to a compatible product unauthenticated state. Thus, when the compatible product 201 is attached to the RX 111 again thereafter, it is possible to execute an appropriate authentication process again. In addition, the RX 111 can switch a power profile of the WPC standard to be used in accordance with the authentication state of the compatible product 201. For example, an MPP can be used as a power profile only when the compatible product 201 is attached to the RX 111 and has been authenticated.

### <Third embodiment>

Hereinafter, a third embodiment will be described in detail with reference to the accompanying drawings. In addition, repeated description of the same or similar components as those in the first and second embodiments will be omitted. In this embodiment, similarly to the second embodiment, a power receiving apparatus is used as the device 101 in the first embodiment. A configuration example of a system in this embodiment, and configurations of a power receiving apparatus (RX 111), a compatible product 201, and a power transmitting apparatus (TX 1001) are the same as those in the second embodiment. For this reason, the description thereof will be omitted.

### [Processing for power receiving apparatus]

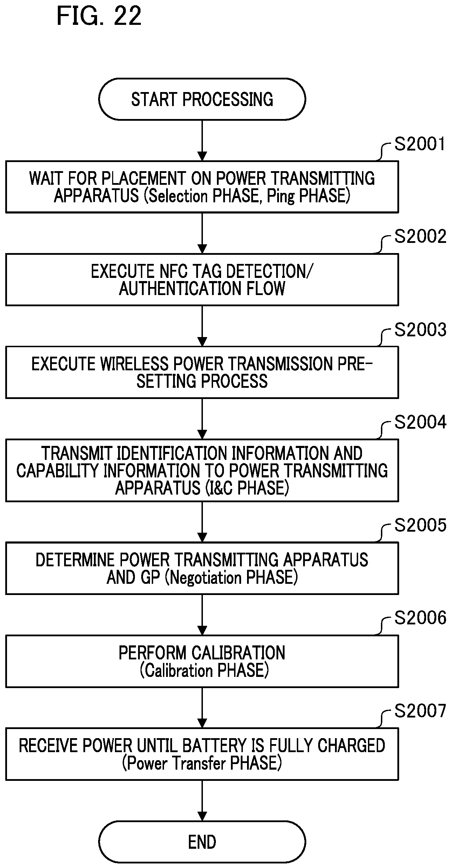

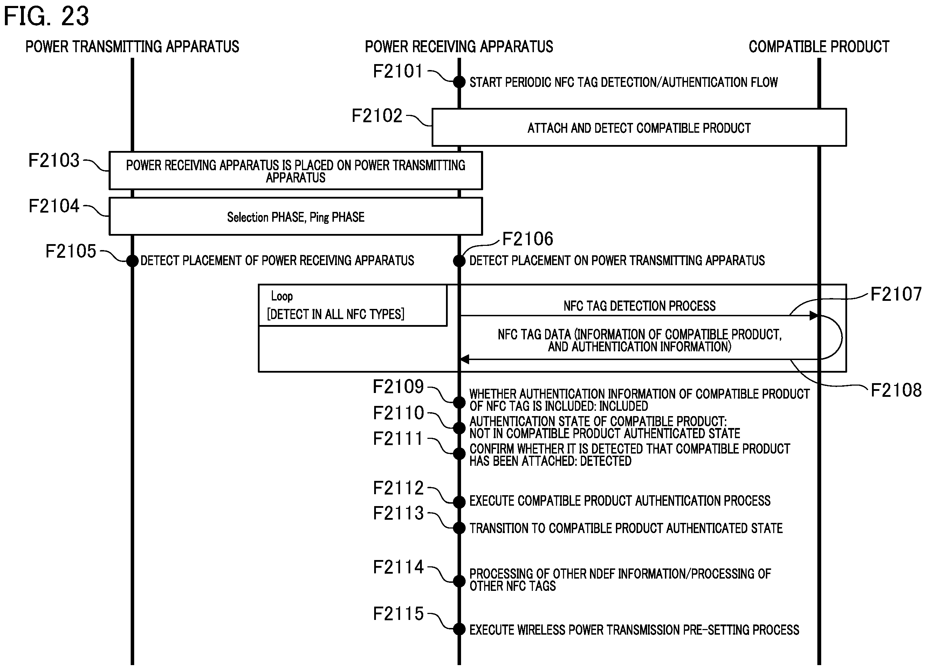

An overview of a flow of processing of the RX 111 is shown in Fig. 16 as in the second embodiment. In this embodiment, an NFC tag detection/authentication flow is executed periodically at the initial point in time (F2101 in Fig. 23 to be described later), and then, when the compatible product 201 is attached to the RX 111, the attachment is detected (F2102 in Fig. 23). These points are the same as those in the second embodiment. However, in this embodiment, after the attachment of the compatible product 201 is detected, the NFC tag detection/authentication flow is not executed until the RX 111 is placed on the TX 1001. The NFC tag detection/authentication flow is executed after the RX 111 is placed on the TX 1001 (S1502, S2002 in Fig. 22 to be described later, F2107 in Fig. 23). That is, in this embodiment, the NFC tag detection/authentication flow is executed on the basis of the RX 111 being placed on the TX 1001. Thereafter, the RX 111 starts a wireless power transmission process based on the WPC standard, that is, a process of receiving power from the TX 1001 (S1503, S2003 and the subsequent steps in Fig. 22).

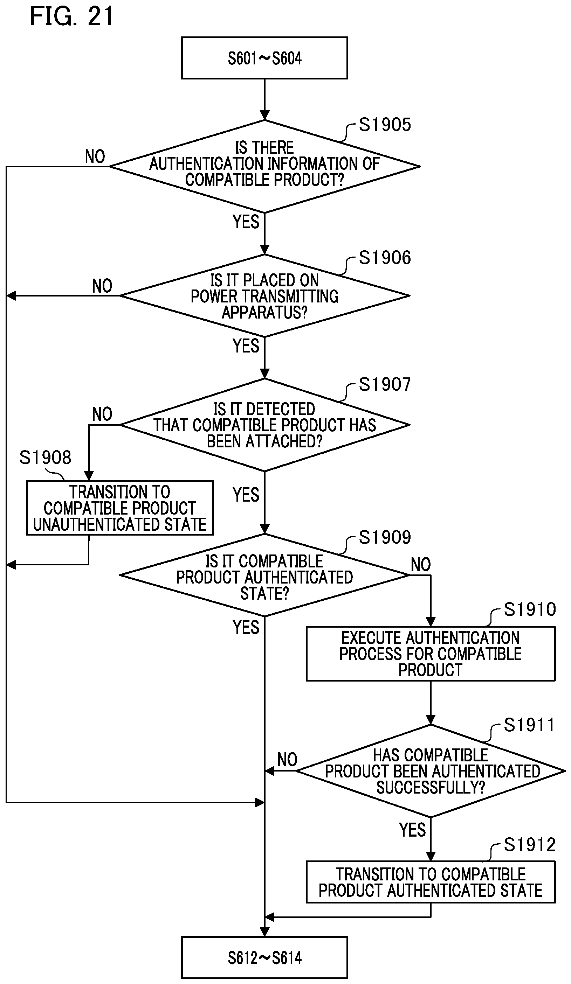

Fig. 21 is a flowchart showing details of the processing of the NFC tag detection/authentication flow (S1502) in Fig. 16. The processes of S1901 to S1904 are the same as the processes of S601 to S604 shown in Fig. 6 as in the first and second embodiments, and thus the description thereof will be omitted.

In S1905, the RX 111 determines whether the NDEF information confirmed in S604 includes information on the authentication of the compatible product 201 (the NDEF information 802 in Fig. 9, that is, authentication information).

When there is no authentication information of the compatible product 201 (No in S1905), the RX 111 proceeds to S612 and does not perform an authentication process. When there is authentication information of the compatible product 201 (Yes in S1905), the RX 111 determines in S1906 whether it is detected that the RX 111 has been placed on the TX 1001.

When it is not detected that the RX 111 has been placed on the TX 1001 (No in S1906), the RX 111 proceeds to S612 and does not perform an authentication process. When it is detected that the RX 111 has been placed on the TX 1001 (Yes in S1906), the RX 111 determines in S1907 whether the sensor 103 has detected that a compatible product is attached to the RX 111.

When it is not detected that the compatible product is attached to the RX 111 (No in S1907), the RX 111 transitions to a compatible product unauthenticated state in S1908 and stores, in the memory 1306, the fact that the compatible product is in a compatible product unauthenticated state. Thereafter, the processing proceeds to S612. The compatible product unauthenticated state means that the authentication of the compatible product 201 has not been successful. Thereby, when the compatible product is removed from the RX 111 after the compatible product has been successfully authenticated once, the state of the compatible product 201 can be returned to a compatible product unauthenticated state. Thus, when the compatible product 201 is attached to the RX 111 again thereafter, it is possible to execute an appropriate authentication process again.

When it is detected that the compatible product 201 has been attached to the RX 111 (Yes in S1907), the RX 111 proceeds to S1909. The subsequent processes are the same as those in the first and second embodiments, and thus the description thereof will be omitted.

Fig. 22 is a flowchart showing details of a wireless power transmission process of the RX 111 based on the WPC standard in S1503 in Fig. 16 in this embodiment. S1503 in Fig. 16 means starting a power transmission process from the TX 1001 (first, a pre-setting process). This embodiment differs from the second embodiment in that the NFC tag detection/authentication flow is executed (S1502, S2002) before the pre-setting process (S2003) after the RX 111 is placed on the TX 1001 (S2001). The process of S2003 and the subsequent processes are the same as S1602 in Fig. 17, and thus the description thereof will be omitted.

### [Processing of entire system]

Fig. 23 is a sequence diagram showing processing of the entire system. In the initial state, the RX 111 is not placed on the TX 1001 (a state where power is not receivable). F2101 and F2102 are the same as F1801 and F1802 in Fig. 19, and thus the description thereof will be omitted.

In this embodiment, it is assumed that the RX 111 is placed on the TX 1001 in F2103. When the RX 111 is placed on the TX 1001 in F2103, the TX 1001 and the RX 111 execute communication of a Ping phase of the WPC standard in F2104, and thus the TX 1001 detects in F2105 that the RX 101 has been placed on the TX 1001. In addition, the RX 101 detects in F2106 that the RX 101 has been placed on the TX 1001.

F2107 to F2115 are the same as F1803 to F1810 and F1815 (Fig. 19) in the second embodiment, and thus the description thereof will be omitted. In addition, the processes after F2115 are the same as F1816 to F1823 (Fig. 20) in the second embodiment, and thus the description thereof will be omitted.

According to this embodiment described above, even when an NFC tag detection/authentication flow is not executed before the RX 111 is placed on the TX 1001, the flow is executed after the RX 111 is placed on the TX 1001, and then a pre-setting process is executed. Thereby, it is possible to obtain the same effects as in the second embodiment.

### <Fourth embodiment>

Hereinafter, a fourth embodiment will be described in detail with reference to the accompanying drawings. In addition, repeated description of the same or similar components as those in the first to third embodiments will be omitted. In this embodiment, as in the second and third embodiments, a power receiving apparatus is applied as the device 101 in the first embodiment. A configuration example of a system in this embodiment, and configurations of a power receiving apparatus (RX 111), a compatible product 201, and a power transmitting apparatus (TX 1001) are the same as those in the second and third embodiments. For this reason, the description thereof will be omitted.

### [Processing for power receiving apparatus]

An overview of a flow of processing of the RX 111 is the same as that in the third embodiment (described with reference to Fig. 16), and thus the description thereof will be omitted. This embodiment differs from the third embodiment in that, in a wireless power transmission process based on the WPC standard in S1503 in Fig. 16, a requested power selection process is executed after a pre-setting process.

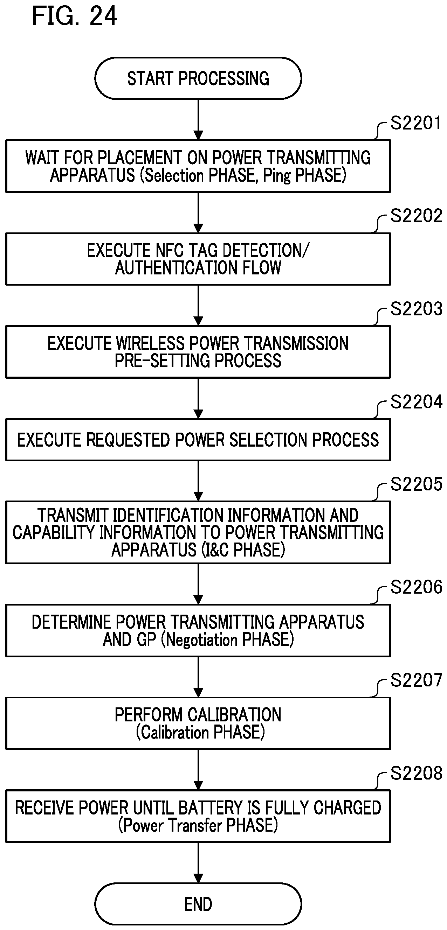

Fig. 24 is a flowchart showing details of a wireless power transmission process of the RX 111 based on the WPC standard in S1503 in Fig. 16. As described above, processes (S2201 to S2203 and S2205 to S2208) other than a requested power selection process in S2204 are the same as those in the third embodiment (Fig. 22), and thus the description thereof will be omitted.

In S2204, the RX 111 executes the requested power selection process. The requested power selection process is a process of selecting a GP requested power value on the basis of information of a compatible product 201 detected by the RX 111, information of other NFC tags, and the specifications of the RX 111.

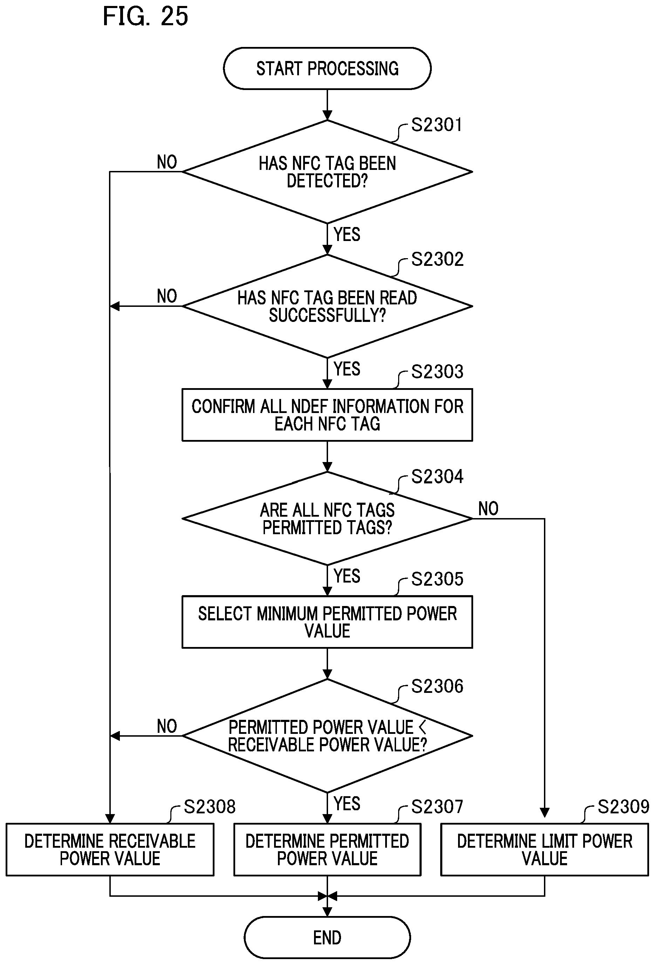

Fig. 25 is a flowchart showing the requested power selection process. In S2301, the RX 111 determines whether an NFC tag has been detected. A determination result thereof is obtained through an NFC tag detection process (S602 in Fig. 6), which is executed in an NFC tag detection/authentication flow in S2202.

When no NFC tag has been detected (No in S2301), the RX 111, in S2308, determines a receivable power value held by the RX 111 as a GP requested power value, stores it in a memory 1306, and ends the processing. The receivable power value is the maximum power value that the RX 111 can receive at the present time, and can be determined by the operating state of the RX 111, such as a load, a temperature, and/or a coupling coefficient of transmitting and receiving coils, but is not limited thereto. A control unit 1305 is mainly an example of a calculation means for calculating a receivable power value on the basis of the operating state of the power receiving apparatus.

When an NFC tag has been detected (Yes in S2301), the RX 111, in S2302, determines whether the NFC tag has been successfully read. A determination result thereof is obtained by the process of S603 which is executed in the NFC tag detection/authentication flow of S2202.

When the NFC tag has not been successfully read (No in S2302), the RX 111 executes S2308 described above and ends the processing. When the NFC tag has been successfully read (Yes in S2302), the RX 111 confirms all pieces of NDEF information of the NFC tag in S2303. When a plurality of NFC tags have been detected, the RX 111 confirms all pieces of NDEF information for each NFC tag. When the NFC tag has been successfully read (Yes in S603), the RX 111 stores NDEF information of all NFC tags having been successfully read in the memory 1306. In S2303, the RX 111 only needs to confirm this NDEF information. Confirming the NDEF information means analyzing the NDEF information (for example, the NDEF information 801 to 803 shown in Fig. 9).

In the example shown in Fig. 9, the NDEF information 803 includes information for permitting (or allowing) NFC tags to transmit power. In S2304, the RX 111 determines whether all NFC tags are permitted to transmit power. When the RX 111 determines that all NFC tags are permitted to transmit power (YES in S2304), a minimum value is selected among permitted power values of all NFC tags in S2305 and is set as a permitted power value to be used in the subsequent processes. This means that the permitted power value in the NDEF information 803 (for example, 8 watts) is used.

On the other hand, when the RX 111 determines that at least one of the detected NFC tags is not an NFC tag that is permitted to transmit power (NO in S2304), a limit power value is determined as a GP requested power value in S2309, and the requested power selection process ends. The limit power value is a sufficiently small value that is unlikely to cause damage or heat generation of an NFC tag even when the power transmission process is continued. The limit power value can be a predetermined value or less, for example, 5 watts or less, but is not limited thereto.

In S2306, the RX 111 determines whether the minimum permitted power value selected in S2305 is smaller than the receivable power value. When the permitted power value is smaller than the receivable power value (YES in S2306), the RX 111 determines the permitted power value as a GP requested power value in S2307 and ends the requested power selection process. On the other hand, when the permitted power value is equal to or greater than the receivable power value (NO in S2306), the RX 111 executes S2308 described above and ends the requested power selection process.

### [Processing of entire system]

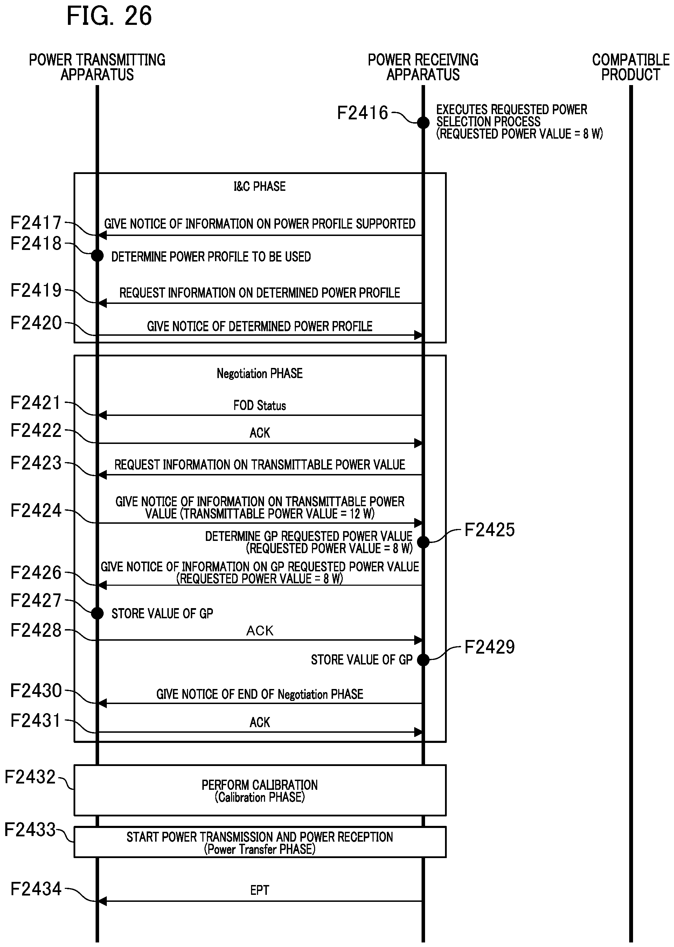

Fig. 26 is a sequence diagram showing processing of the entire system. In the initial state, the RX 111 is not placed on the TX 1001. The processes prior to the process of F2416 are the same as the processes of F2101 to F2115 (Fig. 23) in the third embodiment, and thus the description thereof will be omitted.

In F2416, the RX 111 executes the requested power selection process. As an example, it is assumed that all NFC tags detected in the NFC tag detection/authentication flow (F2107) include information for allowing power transmission and that the smallest permitted power value among the NFC tags is 8 W. In addition, as an example, it is assumed that the permitted power value of the RX 111 is 12 W. In this case, in S2306 in Fig. 25, the permitted power value is smaller than the receivable power value, and thus the determination result is Yes, and the permitted power value of 8 W is selected as the GP requested power value in S2307.

An I&C phase process from F2417 to F2420 is the same as in the second and third embodiments, and thus the description thereof will be omitted.

Next, the RX 111 and the TX 1001 proceed to a Negotiation phase process. In F2421, the RX 111 transmits a Foreign Object Detection (FOD) Status data packet of the WPC standard to the TX 1001. When the TX 1001 receives the FOD Status data packet, it is determined that there is no foreign object in this embodiment, and an ACK is transmitted in F2422.

In F2423, the RX 111 requests information on a transmittable power value from the TX 1001. This request can be realized by transmitting a capability information notification request to the TX 1001 by using a General Request (GRQ) data packet of the WPC standard. When the TX 1001 is requested to provide the information on the transmittable power value, the RX 111 is notified of the information on the transmittable power value in F2424. This notification can be realized by a Power Transmitter Capabilities (CAP) data packet of the WPC standard. The CAP data packet may include the transmittable power value of the TX 1001, that is, a Negotiable Load Power.

In F2425, the RX 111 determines a GP requested power value. The RX 111 compares the requested power value selected in the requested power selection process in F2416 with the transmittable power value notified of by the TX 1001 in F2424, and determines the smaller value out of the two values as the GP requested power value. Since the transmittable power value of the TX 1001 is 12 W, and the requested power value selected in the requested power selection process in F2416 is 8 W, the GP requested power value is determined to be 8 W.

In F2426, the RX 111 stores the determined GP requested power value in a Specific Request (SRQ) data packet of the WPC standard and transmits it to the TX 1001. When the TX 1001 receives the SRQ data packet which is a GP request, the requested power value is smaller than its own transmittable power value, and thus the TX 1001 accepts the requested power value and stores it as the GP value in F2427.

In F2428, the TX 1001 transmits an ACK to the RX 111 as a response to the acceptance. When the RX 111 receives the ACK, the RX 111 stores the requested power value as the GP value in F2429 on the assumption that the requested power value transmitted in F2426 has been accepted. In F2430, the RX 111 transmits a notification of the end of the Negotiation phase to the TX 1001 using the SRQ data packet of the WPC standard. When the TX 1001 receives the notification of the end of the Negotiation phase, the TX 1001 transmits an ACK to the RX 111 as a response to the acceptance in F2431.

The processes of F2432 to F2434 are the same as the processes of F1821 to F1823 in Fig. 20, and thus the description thereof will be omitted.

According to this embodiment described above, it is possible to obtain the same effects as in the second and third embodiments. In addition, the RX 111 can select an appropriate requested power value on the basis of the information on the NFC tag detected in the NFC tag detection process. Thereby, it possible to prevent products, parts, and the like equipped with an NFC function from being damaged by electromagnetic waves transmitted from the TX 1001.

### <Other embodiments>

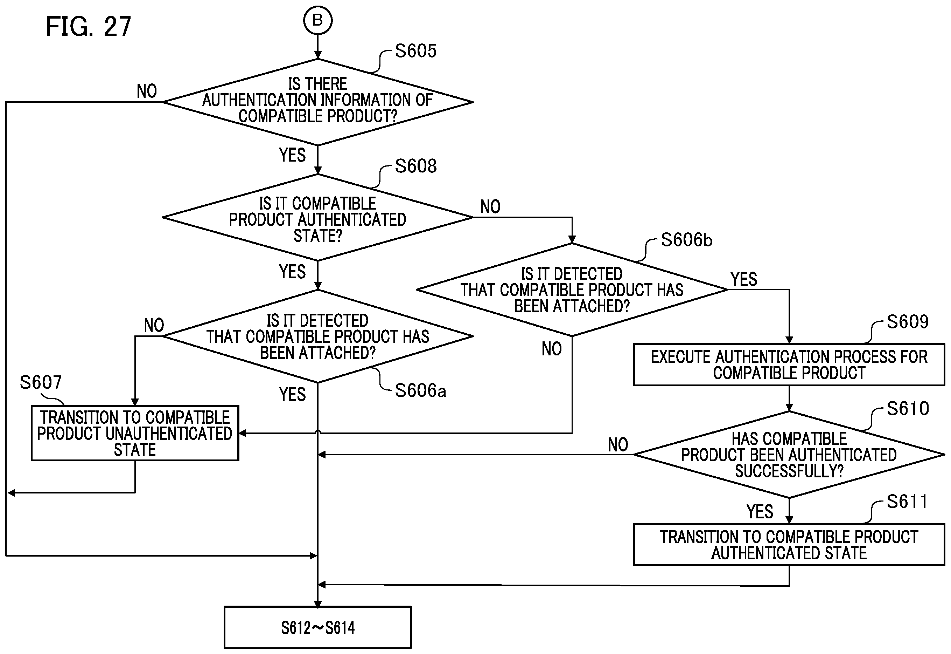

In the first embodiment, the order of S606 and S608 in Fig. 7 may be reversed. Fig. 27 is a flowchart showing such an example. After S605, in both a case where the compatible product 201 has already been authenticated (YES) and a case where the compatible product 201 has not been authenticated (NO) in S608, it is determined whether the attachment of the compatible product 201 to the device 101 has been detected (S606a and S606b). Then, in S606b, when the attachment of the compatible product 201 to the device 101 has been detected (YES), the processing of the device 101 may proceed to S609. Also in the example of Fig. 27, as in the example described in the description of Fig. 7, when the attachment of the compatible product 201 has not been detected (No in S606a) even when the compatible product 201 has already been authenticated (YES in S608), a process of canceling the authentication is executed in S607.

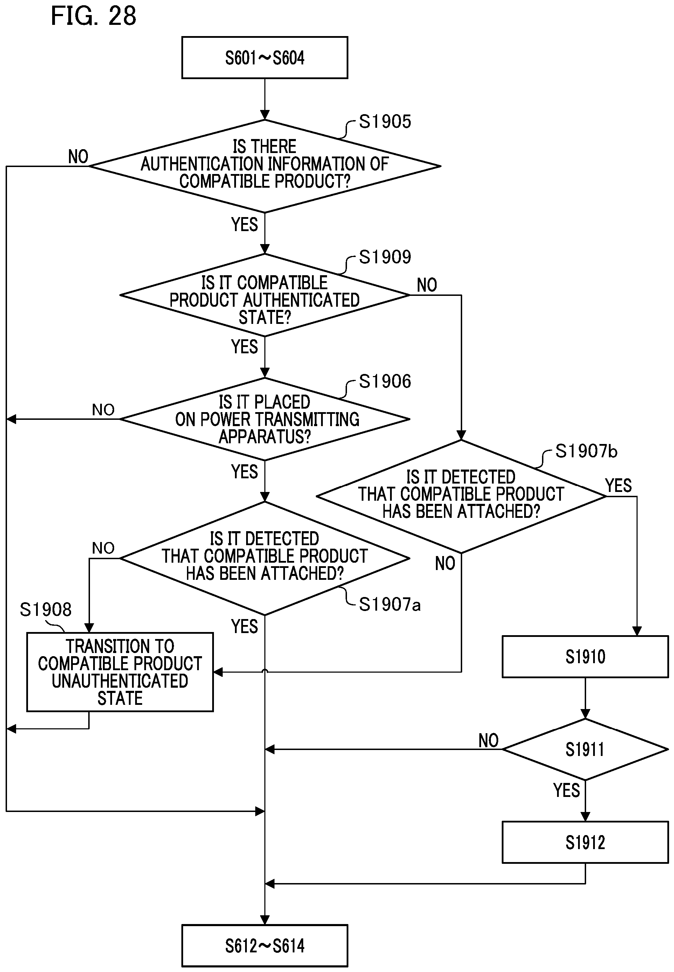

In the third and fourth embodiments, the order of S1906 to S1909 in Fig. 21 can be changed as appropriate for the same purpose as above. Fig. 28 is a flowchart showing such an example. The example of this flowchart shows YES in S1909 then YES in S1906, then YES in S1907a, then S612. However, the disclosure is not limited thereto and may be YES in S1909, then YES in S1907a, then S1906, then S612.

In the first embodiment, the following is described as an example of a detection means for detecting that the device 101 and the compatible product 201 have been combined. For example, when the compatible product 201 is attached to or combined with the device 101, the device 101 detects the detection target portion 203 using the sensor 103, thereby detecting that the compatible product 201 has been attached to the device 101. However, this is not limiting, and for example, the attachment may be detected by periodic NFC tag detection. Specifically, the following embodiment is assumed. In the periodic NFC tag detection shown in Fig. 8, the device 101 executes detection of the NFC tag 202 of the compatible product 201 (S702), and when the NFC tag detection is successful (YES in S703), the device 101 stores the read NDEF information (S704). For example, when information on the compatible product 201 in the NDEF information 801 shown in Fig. 9 (equipment type, manufacturer, serial number, and the like) among the NDEF information stored here satisfies a predetermined condition, the device 101 determines that the compatible product 201 has been attached to the device 101. The predetermined condition is, for example, that all of the following conditions are satisfied.
- Equipment type: Cover
- Manufacturer: Information that is set in advance in the device 101
- Serial number: Information that is set in advance in the device 101

Some (in some cases, all) of the configurations in the above embodiments may be replaced with other configurations that perform the same functions or may be omitted, or other configurations may be added. In addition, the disclosure is not limited to the WPC standard and can be applied to various standards.

The power transmitting apparatus and the power receiving apparatus may be, for example, an image input device such as an imaging device (still camera, video camera, or the like) or a scanner, or may be an image output device such as a printer, a copier, or a projector. They may also be storage devices such as a hard disk device or a memory device, or information processing devices such as a personal computer (PC), a smartphone, and a tablet device.

The power receiving apparatus of the disclosure may also be an information terminal device. For example, the information terminal device includes a display unit (display) that displays information to a user and receives power from a power receiving antenna. The power received from the power receiving antenna is stored in a power storage unit (battery), and power is supplied to the display unit from the battery. In this case, the power receiving apparatus may include a communication unit that communicates with other apparatuses other than the power transmitting apparatus. The communication unit may be compatible with communication standards such as NFC communication and the fifth generation mobile communication system (5G).

Furthermore, the power receiving apparatus of the disclosure may be a vehicle such as an automobile. For example, an automobile serving as a power receiving apparatus may receive power from a charger (power transmitting apparatus) via a power transmitting antenna installed in a parking lot. In addition, an automobile serving as a power receiving apparatus may receive power from a charger (power transmitting apparatus) via a power transmitting antenna embedded in a road. Such an automobile supplies the received power to a battery. The power of the battery may be supplied to a driving part (motor, electric part) that drives the wheels, or may be used to drive a sensor used for driving assistance or to drive a communication unit that communicates with an external apparatus. That is, in this case, the power receiving apparatus may include, in addition to the wheels, a battery, a motor or a sensor that is driven using received power, and even a communication unit that communicates with apparatuses other than the power transmitting apparatus. Furthermore, the power receiving apparatus may include an accommodation unit that accommodates a person. For example, the sensor may be a sensor used to measure a distance between vehicles or distances to other obstacles. The communication unit may be compatible with the Global Positioning System (Global Positioning Satellite, GPS), for example. In addition, the communication unit may be compatible with communication standards such as the 5th generation mobile communication system (5G). In addition, the vehicle may be a bicycle or a motorcycle.

In addition, the power receiving apparatus of the disclosure may be an electric tool, a home appliance, or the like. These pieces of equipment, which are power receiving apparatuses, may include a battery, as well as a motor that is driven by received power stored in the battery. These pieces of equipment may also include a notification means for giving a notice of the residual capacity of the battery, and the like. These pieces of equipment may also include a communication unit that communicates with other devices other than the power transmitting apparatus. The communication unit may be compatible with communication standards such as NFC and the fifth generation mobile communication system (5G).

In addition, the power transmitting apparatus of the disclosure may be an in-vehicle charger that transmits power to mobile information terminal equipment, such as a smartphone or a tablet compatible with wireless power transmission, inside a vehicle such as an automobile. Such an in-vehicle charger may be provided anywhere in the automobile. For example, the in-vehicle charger may be installed in the console of the automobile, or may be installed in an instrument panel (dashboard), at a position between seats for passengers, on the ceiling, or on a door. However, the in-vehicle charger should not be installed at a location where the in-vehicle charger interferes with driving. Although an example in which the power transmitting apparatus is an in-vehicle charger has been described, such a charger is not limited to a charger disposed in a vehicle, and may be installed in a transport means such as a train, an aircraft, or a vessel. The charger in this case may also be installed at a position between seats for passengers, on the ceiling, or on a door.

In addition, a vehicle such as an automobile equipped with an in-vehicle charger may be the power transmitting apparatus. In this case, the power transmitting apparatus includes wheels and a battery, and supplies power to the power receiving apparatus by a power transmission circuit unit or a power transmitting antenna using the power of the battery.

The disclosure can also be realized by a process of supplying a program for realizing one or more functions of the above embodiments to a system or an apparatus via a network or a storage medium, and of causing one or more processors of a computer of the system or the apparatus to read and execute the program. The disclosure can also be realized by a circuit (for example, an ASIC) for realizing the one or more functions.

Some of the processes described with reference to the flowcharts in the disclosure may be realized by hardware. For example, a dedicated circuit may be automatically generated on an FPGA according to a program for realizing steps using a predetermined compiler. Alternatively, a gate array circuit may be formed similarly to the FPGA and realized as hardware.

Embodiments of the disclosure can also be realized by a computer of a system or apparatus that reads out and executes computer executable instructions (for example, one or more programs) recorded on a storage medium (which may also be referred to more fully as a 'non-transitory computer-readable storage medium') to perform the functions of one or more of the above-described embodiments and/or that includes one or more circuits (for example, application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments. The computer may comprise one or more processors (for example, central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the disclosure has been described with reference to embodiments, it is to be understood that the disclosure is not limited to the disclosed embodiments but is defined by the scope of the following claims.

## Claims

1. A device (101) that is usable in combination with a compatible product (201), the device comprising:
a detection means (103) configured to detect that the device is combined with the compatible product;
a reading means (304) configured to detect a near field communication (NFC) tag (202) in the compatible product and read one or more pieces of tag information from the detected NFC tag; and
a processing means (305) configured to execute processing related to one of the read one or more pieces of tag information in accordance with whether at least one predetermined condition is satisfied.

2. The device according to claim 1, wherein
the one or more pieces of tag information include authentication information for the device to authenticate the compatible product (201), and
the processing means (305) is configured to execute an authentication process for the compatible product based on the authentication information.

3. The device according to claim 2, wherein the at least one predetermined condition includes a first condition that the combination of the device (101) and the compatible product (201) is detected by the detection means (103), and a second condition that the compatible product is in a state of being authenticated by the authentication process.

4. The device according to claim 3, wherein the processing means (305) does not execute the authentication process in a case where the first condition and the second condition are satisfied or in a case where the first condition is not satisfied, and executes the authentication process in a case where the first condition is satisfied and the second condition is not satisfied.

5. The device according to claim 3, wherein the processing means (305) cancels the authentication of the compatible product in a case where the second condition is satisfied but the first condition is not satisfied.

6. The device according to any one of claims 3 to 5, further comprising:
a power receiving means (1307) configured to wirelessly receive power from a power transmitting apparatus (1001),
wherein the at least one predetermined condition further includes a third condition that the device is in a state where it is able to receive power from the power transmitting apparatus.

7. The device according to claim 6, wherein the processing means (305) is configured to not execute the authentication process in a case where the first condition, the second condition, and the third condition are satisfied, or in a case where the third condition is not satisfied, and to execute the authentication process in a case where the first condition and the third condition are satisfied, but the second condition is not satisfied.

8. The device according to claim 7, wherein the processing means (305) is configured to cancel the authentication of the compatible product (201) in a case where the second condition and the third condition are satisfied, but the first condition is not satisfied.

9. The device according to claim 6, 7 or 8, wherein the processing means (305) is configured to perform settings related to a wireless power transmission process between the device and the power transmitting apparatus (1001).

10. The device according to any one of claims 6 to 9, wherein the processing means (305) is configured to set a power profile in the wireless power consortium (WPC) standard in accordance with the first condition and the second condition.

11. The device according to claim 10, wherein the processing means (305) is configured to set a first power profile in a case where the first condition and the second condition are satisfied, and set a second power profile, which is different from the first power profile, and a third power profile, which is different from the first and second power profiles, in a case where at least one of the first condition and the second condition is not satisfied.

12. The device according to any one of claims 6 to 11, wherein the processing means (305) is configured to confirm whether the one or more pieces of tag information include information indicating that power transmission is permitted, in a case where the third condition is satisfied.

13. The device according to claim 12, wherein the processing means (305) is configured to, in a case where there is information indicating that the power transmission is permitted, determine power information indicating power requested from the power transmitting apparatus in negotiation with the power transmitting apparatus, based on the information indicating that power transmission is permitted.

14. The device according to claim 12, wherein the processing means (305) is configured to determine power information of power limited to a predetermined value or less in negotiation with the power transmitting apparatus in a case where there is no information indicating that power transmission is permitted or in a case where the reading means does not detect the NFC tag.

15. A control method for a device (101) that is usable in combination with a compatible product (201), the control method comprising:
detecting that the device is combined with the compatible product;
detecting a near field communication (NFC) tag (202) in the compatible product and reading one or more pieces of tag information from the detected NFC tag; and
executing processing related to one of the read one or more pieces of tag information in accordance with whether at least one predetermined condition is satisfied.
